# EUROPÄISCHE PATENTSCHRIFT

(11) **EP 4 438 998 B1**
(45) Veröffentlichungstag und Bekanntmachung des Hinweises auf die Patenterteilung: **22.10.2025**
(21) Anmeldenummer: 24162762.9
(22) Anmeldetag: 11.03.2024
(51) Int. Cl.: F41H 7/00, B60R 21/13

(54) **ÜBERROLLSCHUTZSYSTEM UND GESCHÜTZTES FAHRZEUG**
ROLLOVER PROTECTION SYSTEM AND PROTECTED VEHICLE
SYSTÈME DE PROTECTION CONTRE LE RETOURNEMENT ET VÉHICULE PROTÉGÉ

(30) Priorität: 30.03.2023 DE 102023108241
(43) Veröffentlichungstag der Anmeldung: 02.10.2024
(73) Patentinhaber: Rheinmetall Landsysteme GmbH, 29345 Südheide (DE)
(72) Erfinder: SEEGER, Martin, 34117 Kassel (DE); BLÄßING, Dr., Tobias, 34314 Hohenkirchen/Espenau (DE); GERLACH, Klaus-Peter, 34212 Melsungen (DE); BECKMANN, Armin, 34621 Frielendorf (DE)
(74) Vertreter: HKW Intellectual Property PartG mbB

(56) Entgegenhaltungen:
- EP-A2- 1 820 688
- US-B2- 7 413 247

## Beschreibung

Die vorliegende Erfindung betrifft ein Überrollschutzsystem für ein geschütztes Fahrzeug und ein geschütztes Fahrzeug mit einem derartigen Überrollschutzsystem.

Geschützte Fahrzeuge, wie beispielsweise Schützenpanzer, weisen gemäß betriebsinternen Erkenntnissen oftmals eine unübersichtliche Fahrzeuggeometrie auf. Dies kann es erforderlich machen, dass einzelne Besatzungsmitglieder über Luke fahren. Dies kann stehend oder sitzend erfolgen. "Über Luke" heißt dabei, dass der Oberkörper oder zumindest der Kopf des jeweiligen Besatzungsmitglieds aus einer Lukenöffnung des geschützten Fahrzeugs in eine Umgebung des geschützten Fahrzeugs hineinragt. Dies kann zum Beispiel für die Unterstützung des Fahrers durch den Kommandanten oder für eine bessere Führbarkeit des geschützten Fahrzeugs im zivilen Straßenverkehr erforderlich sein. Dieser Umstand kann dazu führen, dass im Falle eines Überschlags des geschützten Fahrzeugs das über Luke fahrende Besatzungsmitglied tödlichen Gefahren ausgesetzt ist. Im schlimmsten Fall kann es dazu kommen, dass das Besatzungsmitglied durch das sich überschlagende geschützte Fahrzeug zerquetscht und somit tödlich verletzt wird.

Die US 7,413,247 B2 beschreibt ein federvorgespanntes Insassenrückzugssystem für ein Fahrzeug, bei dem im Fall eines Überschlags des Fahrzeugs ein Besatzungsmitglied in das Fahrzeug zurückgezogen wird, um Verletzungen des Besatzungsmitglieds bei dem Überschlag zu verhindern.

Die EP 1 820 688 A2 zeigt eine Vorrichtung zum Personenschutz an einem Fahrzeug mit einer festen Fahrzeugstruktur und einem auf die Fahrzeugstruktur aufgesetzten Aufbau, in dem sich mindestens ein Sitz befindet, wobei der Neigungswinkel des Fahrzeugs gemessen wird und der Sitz in Richtung des Inneren der festen Fahrzeugstruktur bewegt wird, wenn der Neigungswinkel einen vorgegebenen Schwellwert überschreitet.

Vor diesem Hintergrund besteht eine Aufgabe der vorliegenden Erfindung darin, ein verbessertes Überrollschutzsystem für ein geschütztes Fahrzeug zur Verfügung zu stellen.

Demgemäß wird ein Überrollschutzsystem für ein geschütztes Fahrzeug vorgeschlagen. Das Überrollschutzsystem umfasst ein Tragelement zum Tragen eines Besatzungsmitglieds und einen dem Tragelement zugeordneten Aktor, wobei der Aktor dazu eingerichtet ist, das Tragelement unmittelbar vor oder bei einem Überschlag des geschützten Fahrzeugs von einem ausgefahrenen Zustand, in dem sich das Besatzungsmitglied teilweise innerhalb und teilweise außerhalb des geschützten Fahrzeugs aufhält, in einen eingefahrenen Zustand, in dem sich das Besatzungsmitglied vollständig innerhalb des geschützten Fahrzeugs aufhält, zu verbringen, so dass das Besatzungsmitglied während des Überschlags des geschützten Fahrzeugs geschützt ist. Das Überrollschutzsystem umfasst ein Dämpfungselement zum Verzögern des Tragelements vor einem Erreichen des eingefahrenen Zustands, wobei das Dämpfungselement einen Gurtwickler und einen auf den Gurtwickler aufwickelbaren und von diesem abwickelbaren Gurt aufweist.

Dadurch, dass das Tragelement mitsamt dem Besatzungsmitglied bei einem Überschlag des geschützten Fahrzeugs von dem ausgefahrenen Zustand in den eingefahrenen Zustand in das geschützte Fahrzeug hineingezogen wird, werden Verletzungen des Besatzungsmitglieds bei einem Überschlag des geschützten Fahrzeugs zuverlässig verhindert.

Unter einem "Überrollschutzsystem" ist vorliegend demgemäß bevorzugt kein System zu verstehen, welches ein Überrollen oder einen Überschlag des geschützten Fahrzeugs an sich verhindert, sondern ein System, welches mögliche negative Folgen eines Überschlags des geschützten Fahrzeugs für das Besatzungsmitglied verhindert oder zumindest reduziert. Das Überrollschutzsystem kann auch als Überrollschutzvorrichtung bezeichnet werden. Das Überrollschutzsystem kann bevorzugt an geschützten Fahrzeugen, die ab Werk noch kein derartiges Überrollschutzsystem aufweisen, nachgerüstet werden. Das Überrollschutzsystem ist demgemäß nachrüstbar. Das Überrollschutzsystem ist bevorzugt modular aufgebaut. Das heißt insbesondere, dass das Überrollschutzsystem als Nachrüstmodul an dem geschützten Fahrzeug angebracht werden kann. Alternativ kann das geschützte Fahrzeug auch ab Werk mit einem derartigen Überrollschutzsystem ausgerüstet werden.

Darunter, dass das Fahrzeug "geschützt" ist, ist vorliegend insbesondere zu verstehen, dass das geschützte Fahrzeug gegen Beschuss, Sprengfallen, unkonventionelle Spreng- oder Brandvorrichtungen (USBV, Engl.: Improvised Explosive Devices, IED), Minen oder dergleichen geschützt ist. Hierzu kann das geschützte Fahrzeug gepanzert sein. Das geschützte Fahrzeug kann ein Kettenfahrzeug oder ein Radfahrzeug sein. Nachfolgend wird davon ausgegangen, dass das geschützte Fahrzeug ein Radfahrzeug ist. Das geschützte Fahrzeug kann mehrere Radachsen aufweisen, an denen Räder vorgesehen sind. Beispielsweise sind vier Radachsen mit acht Rädern vorgesehen. Es können jedoch auch weniger oder mehr als vier Radachsen vorgesehen sein.

Das geschützte Fahrzeug weist vorzugsweise eine geschützte Fahrzeugzelle auf. Die geschützte Fahrzeugzelle kann insbesondere ein austauschbares Missionsmodul des geschützten Fahrzeugs sein. Ein Beispiel für ein derartiges Missionsmodul ist ein Sanitätsmodul. Das geschützte Fahrzeug, insbesondere die geschützte Fahrzeugzelle, weist beispielsweise eine geneigte Vorderwand und ein Dach auf.

An dem geschützten Fahrzeug oder an der geschützten Fahrzeugzelle können eine oder mehrere Lukenöffnungen vorgesehen sein. Jeder Lukenöffnung kann ein derartiges Überrollschutzsystem zugeordnet sein. Ferner kann jede Lukenöffnung mit Hilfe eines beweglichen, insbesondere verschiebbaren oder verschwenkbaren, Lukendeckels geöffnet und geschlossen werden. Die Lukenöffnung oder die Lukenöffnungen können an einer Wandung des geschützten Fahrzeugs oder der geschützten Fahrzeugzelle vorgesehen werden. Die Wandung kann Teil des vorgenannten Dachs oder der vorgenannten Vorderwand sein.

Dass sich das Besatzungsmitglied "teilweise innerhalb und teilweise außerhalb" des geschützten Fahrzeugs aufhält oder befindet, kann vorliegend bedeuten, dass das Besatzungsmitglied beispielsweise seinen Oberkörper, insbesondere zumindest seinen Kopf, aus einer wie zuvor erwähnten Lukenöffnung streckt, um über Luke zu fahren. In diesem Fall kann sich beispielsweise der Unterkörper des Besatzungsmitglieds in einem Innenraum des geschützten Fahrzeugs oder der geschützten Fahrzeugzelle befinden, wobei sich der Oberkörper außerhalb dieses Innenraums in einer Umgebung des geschützten Fahrzeugs befindet. "Teilweise innerhalb und teilweise außerhalb" ist vorliegend insbesondere so zu verstehen, dass sich das Besatzungsmitglied gleichzeitig teilweise innerhalb und teilweise außerhalb des Innenraums aufhält.

Dem geschützten Fahrzeug ist bevorzugt ein Koordinatensystem mit einer ersten Raumrichtung, Längsrichtung oder x-Richtung, einer zweiten Raumrichtung, Hochrichtung oder y-Richtung und einer dritten Raumrichtung, Querrichtung oder z-Richtung zugeordnet. Die Richtungen sind insbesondere senkrecht zueinander orientiert. Eine Bewegung des geschützten Fahrzeugs um die x-Richtung kann als Rollen oder Rollbewegung bezeichnet werden. Eine Bewegung des geschützten Fahrzeugs um die y-Richtung kann als Gieren oder Gierbewegung bezeichnet werden. Eine Bewegung des geschützten Fahrzeugs um die z-Richtung kann als Nicken oder Nickbewegung bezeichnet werden. Eine Fahrtrichtung des geschützten Fahrzeugs ist vorzugsweise entgegen der x-Richtung orientiert. Das geschützte Fahrzeug kann sich jedoch auch - beispielsweise bei einer Rückwärtsfahrt - entgegen der Fahrtrichtung fortbewegen.

Unter einem "Überschlag" des geschützten Fahrzeugs ist vorliegend insbesondere zu verstehen, dass sich das geschützte Fahrzeug zumindest von den Rädern auf das Dach oder auf die Vorderwand dreht. Dies schließt jedoch nicht aus, dass sich das geschützte Fahrzeug bei dem Überschlag zumindest einmal oder auch mehrmals um die bevorzugt senkrecht zu den Radachsen orientierte x-Richtung und/oder um die bevorzugt parallel zu den Radachsen orientierte z-Richtung überschlägt oder dreht. Ein Überschlag des geschützten Fahrzeugs kann auch eine kombinierte Roll-, Gier- und/oder Nickbewegung sein. "Unmittelbar vor dem Überschlag" kann vorliegend bedeuten, dass das Überrollschutzsystem Bruchteile von Sekunden vor dem eigentlichen Überschlag ausgelöst wird. Dies kann basierend auf Sensorsignalen einer Sensorik des Überrollschutzsystems erfolgen.

Das Tragelement kann ein Sitz für das Besatzungsmitglied sein. Demgemäß können vorliegend die Begriffe "Tragelement" und "Sitz" beliebig gegeneinander getauscht werden. Alternativ kann das Tragelement auch eine Stehplattform für das Besatzungsmitglied sein. Das Besatzungsmitglied kann an einer derartigen Stehplattform festgeschnallt sein, so dass das Besatzungsmitglied bei einem Überschlag des geschützten Fahrzeugs nicht aus der geschützten Fahrzeugzelle herausgeschleudert werden kann. Nachfolgend wird jedoch davon ausgegangen, dass das Überrollschutzsystem ein Tragelement in Form eines Sitzes umfasst. Das Besatzungsmitglied kann an oder auf dem Tragelement in Form eines Sitzes festgeschnallt sein, so dass das Besatzungsmitglied auch in diesem Fall bei einem Überschlag des geschützten Fahrzeugs nicht aus der geschützten Fahrzeugzelle herausgeschleudert werden kann.

Der Aktor kann auch als Aktuator oder als Stellelement bezeichnet werden. Der Aktor kann auch als Aktoreinrichtung bezeichnet werden. Unter einem "Aktor" ist vorliegend ganz allgemein insbesondere eine Baugruppe oder eine Anordnung zu verstehen, die dazu geeignet ist, das Tragelement, insbesondere im Falle eines Überschlags oder eines drohenden Überschlags des geschützten Fahrzeugs, von dem ausgefahrenen Zustand in den eingefahrenen Zustand und optional auch wieder zurück zu verbringen.

Der Aktor kann eine Vielzahl unterschiedlicher Bauteile oder Komponenten, wie beispielsweise eine Verstelleinheit, eine Führung, insbesondere eine Linearführung, Stellelemente, ein Antriebselement oder dergleichen aufweisen. Ferner kann der Aktor auch einen, insbesondere pyrotechnischen, Gasgenerator umfassen. Auch die Verstelleinheit, die Teil des Aktors ist, kann wiederum ebenfalls eine Vielzahl unterschiedlicher Bauteile oder Komponenten, wie beispielsweise das zuvor erwähnte Antriebselement und/oder eine Verriegelung, aufweisen. Für den Fall, dass das Tragelement ein Sitz ist, kann die Verstelleinheit demgemäß als Sitzverstelleinheit bezeichnet werden. Demgemäß sind vorliegend die Begriffe "Verstelleinheit" und "Sitzverstelleinheit" gegeneinander tauschbar.

Dass das Besatzungsmitglied während eines Überschlags des geschützten Fahrzeugs "geschützt" ist, bedeutet vorliegend insbesondere, dass das Überrollschutzsystem verhindert, dass das Besatzungsmitglied zwischen dem geschützten Fahrzeug und einem Untergrund, auf dem sich das geschützte Fahrzeug fortbewegt, eingeklemmt wird. Der eingefahrene Zustand des Tragelements kann auch als eingezogener Zustand des Tragelements bezeichnet werden. Insbesondere wird das Besatzungsmitglied während eines Überschlags des geschützten Fahrzeugs in dem Innenraum des geschützten Fahrzeugs oder der geschützten Fahrzeugzelle geschützt.

Gemäß einer Ausführungsform ist der Aktor dazu eingerichtet, das Tragelement unmittelbar vor oder bei dem Überschlag des geschützten Fahrzeugs pneumatisch, hydraulisch, elektrisch, mechanisch und/oder explosiv von dem ausgefahrenen Zustand in den eingefahrenen Zustand zu verbringen.

Der Aktor kann beispielsweise explosionsartig ein Fluid, insbesondere ein Gas, freisetzen. Insbesondere ist der Aktor dazu geeignet, Energie umzuwandeln, um das Tragelement von dem ausgefahrenen Zustand in den eingefahrenen Zustand zu verbringen. Der Aktor kann jedoch auch dazu geeignet sein, das Tragelement von dem eingefahrenen Zustand zurück in den ausgefahrenen Zustand zu verbringen. Beispielsweise kann der Aktor chemische Energie in mechanische Energie umwandeln. Der Aktor kann einen, insbesondere pyrotechnischen, Gasgenerator umfassen. Dies ist jedoch nicht zwingend erforderlich. Insbesondere kann der Aktor dazu eingerichtet sein, das Tragelement pneumatisch, hydraulisch, elektrisch, mechanisch und/oder explosiv von dem ausgefahrenen Zustand in den eingefahrenen Zustand zu verbringen. Beispielsweise kann der Aktor rein mechanisch fungieren. In diesem Fall kann der Aktor beispielsweise vorgespannte Federelemente aufweisen. Der Aktor kann auch ein Hydraulikzylinder sein oder einen Hydraulikzylinder aufweisen. Auch ein elektrisches Wirkprinzip ist möglich. In diesem Fall kann der Aktor beispielsweise ein Antriebselement in Form eines Elektromotors mit einer Verstelleinrichtung umfassen. Der Aktor kann ferner explosiv fungieren. Es können auch Kombinationen der vorgenannten Wirkprinzipien zur Anwendung kommen. Hierbei sind insbesondere elektromechanische Wirkprinzipien möglich.

Gemäß einer weiteren Ausführungsform weist das Überrollschutzsystem eine Sensorik, die dazu eingerichtet ist, eine Verkippung des geschützten Fahrzeugs um zumindest eine Raumrichtung zu erfassen, und eine Regel- und Steuereinheit auf, die dazu eingerichtet ist, den Aktor basierend auf Sensorsignalen der Sensorik derart anzusteuern, dass der Aktor das Tragelement unmittelbar vor oder bei dem Überschlag des geschützten Fahrzeugs von dem ausgefahrenen Zustand in den eingefahrenen Zustand verbringt.

Die Sensorik kann verschiedenste Sensoren umfassen. Beispielsweise kann die Sensorik einen oder mehrere Neigungssensoren, einen oder mehrere Lagesensoren, einen oder mehrere Beschleunigungssensoren oder dergleichen aufweisen. Die Sensorik ist mit der Regel- und Steuereinheit des Überrollschutzsystems wirkverbunden. Die Wirkverbindung kann drahtgebunden oder drahtlos sein. Die Regel- und Steuereinheit kann ein fahrzeuginternes System, wie beispielsweise ein CAN-Knoten (Engl.: Controller Area Network), oder ein beliebiges Steuergerät sein. Die Regel- und Steuereinheit ist wiederum mit dem Aktor wirkverbunden. Auch hier kann die Wirkverbindung drahtgebunden oder drahtlos sein. Die Regel- und Steuereinheit dient zur Datenauswertung und zur Weitergabe von Steuersignalen an den Aktor. Mit Hilfe der Sensorik kann beispielsweise eine Verkippung des geschützten Fahrzeugs um die x-Richtung, um die y-Richtung und/oder um die z-Richtung erfasst werden. Wird ein bestimmter voreingestellter Grenzwert der Verkippung des geschützten Fahrzeugs überschritten, so dass mit einer gewissen Wahrscheinlichkeit zu erwarten ist, dass sich das geschützte Fahrzeug überschlagen wird, so steuert die Regel- und Steuereinheit den Aktor derart an, dass dieser das Tragelement von dem ausgefahrenen Zustand in den eingefahrenen Zustand verbringt. Die Sensorik zur Überschlagsdetektion kann ferner auch für weitere Komponenten des geschützten Fahrzeugs genutzt werden, welche spezifische Lageinformationen des geschützten Fahrzeugs benötigen. Dies betrifft beispielsweise eine Waffensensorik einer Bewaffnung des geschützten Fahrzeugs.

Gemäß einer weiteren Ausführungsform weist der Aktor eine Verstelleinheit zum Verstellen einer Höhenposition des Tragelements auf, wobei die Regel- und Steuereinheit dazu eingerichtet ist, die Verstelleinheit basierend auf Sensorsignalen der Sensorik derart anzusteuern, dass die Verstelleinheit unmittelbar vor oder bei dem Überschlag des geschützten Fahrzeugs das Tragelement von dem ausgefahrenen Zustand in den eingefahrenen Zustand verbringt.

Insbesondere trägt die Verstelleinheit das Tragelement. Hierzu kann die Verstelleinheit beispielsweise ein Gehäuse aufweisen, welches fest mit dem Tragelement verbunden, beispielsweise mit diesem verschraubt, ist. Mit Hilfe der Verstelleinheit kann eine Position des Tragelements entlang der y-Richtung oder entlang der Hochrichtung des geschützten Fahrzeugs verstellt werden. Unter der "Höhenposition" ist vorliegend die Position des Tragelements entlang der y-Richtung oder entlang der Hochrichtung zu verstehen.

Gemäß einer weiteren Ausführungsform weist der Aktor eine Führung auf, entlang der die Verstelleinheit verlagerbar geführt ist, um das Tragelement unmittelbar vor oder bei dem Überschlag des geschützten Fahrzeugs von dem ausgefahrenen Zustand in den eingefahrenen Zustand zu verbringen.

Insbesondere ist die Verstelleinheit entlang der Führung linear verlagerbar geführt. Die Führung ist insbesondere eine Linearführung und kann daher auch als solche bezeichnet werden. Die Begriffe "Führung" und "Linearführung" können daher vorliegend beliebig gegeneinander getauscht werden. Die Führung verläuft vorzugsweise entlang der y-Richtung. Die Führung kann jedoch auch schräg zu der y-Richtung verlaufen. Die Führung ist vorzugsweise mit einer tragenden Struktur des geschützten Fahrzeugs oder der geschützten Fahrzeugzelle verbunden. Beispielsweise kann die Führung mit der zuvor erwähnten Wandung fest verbunden sein. Zusätzlich oder alternativ kann die Führung auch mit einer Bodenwandung des geschützten Fahrzeugs oder der geschützten Fahrzeugzelle fest verbunden sein. Das heißt insbesondere, dass die Führung sowohl mit der Wandung als auch mit der Bodenwandung fest verbunden sein kann. Die Wandung und die Bodenwandung sind entlang der y-Richtung betrachtet voneinander beabstandet angeordnet. Die Führung kann beispielsweise eine oder mehrere Führungsschienen aufweisen, an denen die Verstelleinheit linear verlagerbar geführt ist. Wie zuvor erwähnt, kann die Verstelleinheit ein Gehäuse aufweisen, welches an der Führung, insbesondere linear, verlagerbar oder verschiebbar geführt sein kann. Die Verstelleinheit kann somit entlang der y-Richtung oder entgegen der y-Richtung entlang der Führung verschoben oder verlagert werden, um das Tragelement von dem ausgefahrenen Zustand in den eingefahrenen Zustand und gegebenenfalls von dem eingefahrenen Zustand wieder zurück in den ausgefahrenen Zustand zu verbringen. Die Führung muss nicht zwingend eine Linearführung sein. Ferner kann die Führung auch rotatorisch fungieren. Es kann auch eine Kombination aus einer linearen und einer rotatorischen Führung eingesetzt werden. Beispielsweise kann eine elliptische Führungsbahn vorgesehen sein.

Gemäß einer weiteren Ausführungsform weist die Verstelleinheit ein Antriebselement auf, das dazu eingerichtet ist, die Verstelleinheit entlang der Führung zu verlagern, wobei die Verstelleinheit dazu eingerichtet ist, das Antriebselement vor dem Verbringen des Tragelements von dem ausgefahrenen Zustand in den eingefahrenen Zustand von der Führung abzukuppeln.

Insbesondere ist das Antriebselement dazu eingerichtet, die Verstelleinheit linear entlang der Führung zu verlagern. Das Antriebselement ist vorzugsweise ein Elektromotor. Das Antriebselement kann eine Abtriebswelle aufweisen, welche um eine Drehachse drehbar an oder in einem Stator des Antriebselements gelagert ist. An der Abtriebswelle kann ein Ritzel angebracht sein, welches in eine an der Führung vorgesehene Verzahnung eingreift. Zwischen der Abtriebswelle und dem Ritzel kann eine Kupplung vorgesehen sein, welche die Abtriebswelle derart mit dem Ritzel koppeln kann, dass die Abtriebswelle ein Antriebsmoment auf das Ritzel aufbringen kann, um so die Verstelleinheit linear entlang der Führung zu verlagern. Mit Hilfe der Kupplung kann das Ritzel jedoch auch von der Abtriebswelle abgekuppelt werden, so dass die Abtriebswelle kein Antriebsmoment mehr auf das Ritzel aufbringen kann. Somit kann das Ritzel mit Hilfe der Kupplung von einem angekuppelten Zustand, in dem die Abtriebswelle ein Antriebsmoment auf das Ritzel aufbringen kann, in einen abgekuppelten Zustand verbracht werden, in dem die Abtriebswelle kein Antriebsmoment auf das Ritzel aufbringen kann. In dem abgekuppelten Zustand kann sich das Ritzel insbesondere frei gegenüber der Abtriebswelle drehen. Zum Verbringen der Kupplung von dem angekuppelten Zustand in den abgekuppelten Zustand und umgekehrt kann ein Kupplungsstellelement vorgesehen sein, das Teil der Verstelleinheit sein kann. Das Kupplungsstellelement kann beispielsweise in das Antriebselement integriert sein. Das Kupplungsstellelement kann beispielsweise ein Elektromotor, ein Pneumatikzylinder oder ein Hydraulikzylinder sein. Die Regel- und Steuereinheit ist bevorzugt in Wirkverbindung mit diesem Kupplungsstellelement, so dass dieses basierend auf Sensorsignalen der Sensorik angesteuert werden kann, um das Ritzel mit Hilfe der Kupplung mit der Abtriebswelle zu koppeln oder von dieser zu entkoppeln. Vor dem Verbringen des Tragelements von dem ausgefahrenen Zustand in den eingefahrenen Zustand wird demgemäß die Kupplung geöffnet, um das Ritzel von der Abtriebswelle abzukuppeln, so dass das Antriebselement von der Führung abgekuppelt ist.

Gemäß einer weiteren Ausführungsform weist die Verstelleinheit ein Sperrelement auf, das dazu eingerichtet ist, formschlüssig in die Führung einzugreifen, wobei die Verstelleinheit dazu eingerichtet ist, das Sperrelement zum Verbringen des Tragelements von dem ausgefahrenen Zustand in den eingefahrenen Zustand außer Eingriff mit der Führung zu bringen.

Eine formschlüssige Verbindung entsteht durch das Ineinander- oder Hintergreifen von zwei Verbindungspartnern. Vorliegend kann das Sperrelement in die zuvor erwähnte Verzahnung der Führung formschlüssig eingreifen, um die Verstelleinheit an der Führung festzulegen. Zum Verbringen des Tragelements von dem ausgefahrenen Zustand in den eingefahrenen Zustand wird das Sperrelement außer Eingriff mit der Führung gebracht, so dass das Tragelement sich zumindest aufgrund seines Eigengewichts entgegen der y-Richtung von dem ausgefahrenen Zustand in den eingefahrenen Zustand verlagert. Diese Bewegung kann beispielsweise durch Federelemente unterstützt werden. Dem Sperrelement ist vorzugsweise ein Stellelement zugeordnet, das mit dem Sperrelement gekoppelt ist. Beispielsweise ist das Stellelement ein Linearmotor, der das Sperrelement in Eingriff mit der Verzahnung bringen kann. Das Stellelement kann das Sperrelement jedoch auch außer Eingriff mit der Verzahnung bringen. Das Stellelement ist in Wirkverbindung mit der Regel- und Steuereinheit. Bevor das Ritzel von der Abtriebswelle abgekuppelt wird, wird das Sperrelement in Eingriff mit der Führung, insbesondere mit deren Verzahnung, gebracht. Die Kupplung, das Kupplungsstellelement, das Sperrelement und das Stellelement des Sperrelements können zusammen eine Verriegelung der Verstelleinheit bilden. Die Verriegelung kann in das Antriebselement integriert sein. Mit Hilfe der Verriegelung kann die Verstelleinheit an der Führung derart verriegelt werden, dass sich die Verstelleinheit mitsamt dem Tragelement gegenüber der Führung nicht mehr bewegen kann. Dementsprechend kann mit Hilfe der Verriegelung die Verstelleinheit auch von der Führung entriegelt werden, so dass das Tragelement von dem ausgefahrenen Zustand in den eingefahrenen Zustand und umgekehrt verbracht werden kann.

Gemäß einer weiteren Ausführungsform weist der Aktor zumindest ein Federelement auf, wobei die Verstelleinheit dazu eingerichtet ist, das zumindest eine Federelement bei einem Verbringen des Tragelements von dem eingefahrenen Zustand in den ausgefahrenen Zustand vorzuspannen.

Insbesondere wird die Verstelleinheit zum Vorspannen des Federelements von dem eingefahrenen Zustand in den ausgefahrenen Zustand verbracht. Dabei wird das Federelement entweder gelängt oder komprimiert. Das Federelement ist nun in dem ausgefahrenen Zustand des Tragelements vorgespannt. Durch ein Entriegeln der Verstelleinheit von der Führung mit Hilfe der zuvor erwähnten Verriegelung kann dann das Tragelement mit Hilfe des vorgespannten Federelements von dem ausgefahrenen Zustand in den eingefahrenen Zustand verbracht werden. Hierbei entspannt sich das Federelement wieder. Das Federelement kann eine Druckfeder sein. Alternativ kann das Federelement auch eine Zugfeder sein. Das Federelement kann eine Zylinderfeder sein. Es können jedoch auch andere Federtypen eingesetzt werden. Insbesondere kann das Federelement eine Zug- und Druckfeder sein. Unter einer "Zug- und Druckfeder" ist vorliegend eine Feder zu verstehen, die sowohl Zug- als auch Druckkräfte aufnehmen kann. Es kann genau ein Federelement vorgesehen sein. Es können jedoch auch mehrere Federelemente vorgesehen sein. Anstatt eines Federelements kann, wie zuvor erwähnt, auch ein anderes Wirkprinzip zum Verbringen des Tragelements von dem ausgefahrenen Zustand in den eingefahrenen Zustand eingesetzt werden. Beispielsweise kann der Aktor einen wie zuvor erwähnten, insbesondere pyrotechnischen, Gasgenerator aufweisen, um das Tragelement von dem ausgefahrenen Zustand in den eingefahrenen Zustand zu verbringen.

Gemäß einer weiteren Ausführungsform ist das zumindest eine vorgespannte Federelement dazu eingerichtet, das Tragelement unmittelbar vor oder bei dem Überschlag des geschützten Fahrzeugs von dem ausgefahrenen Zustand in den eingefahrenen Zustand zu verbringen.

Wie zuvor erwähnt, entspannt sich das vorgespannte Federelement bei dem Verbringen des Tragelements von dem ausgefahrenen Zustand in den eingefahrenen Zustand. Umgekehrt wird das Federelement wieder vorgespannt, wenn das Tragelement von dem eingefahrenen Zustand in den ausgefahrenen Zustand verbracht wird. Wie zuvor erwähnt, können zum Verbringen des Tragelements von dem ausgefahrenen Zustand in den eingefahrenen Zustand auch andere Wirkprinzipien als das Federelement eingesetzt werden.

Gemäß einer weiteren Ausführungsform weist der Aktor ein erstes Federelement und ein zweites Federelement auf, wobei die Verstelleinheit zwischen dem ersten Federelement und dem zweiten Federelement angeordnet ist.

Insbesondere ist die Verstelleinheit entlang der y-Richtung betrachtet zwischen dem ersten Federelement und dem zweiten Federelement angeordnet. Wie zuvor erwähnt, weist die Verstelleinheit bevorzugt ein Gehäuse auf, wobei das Gehäuse zwischen dem ersten Federelement und dem zweiten Federelement angeordnet sein kann. Das erste Federelement und/oder das zweite Federelement können fest mit dem Gehäuse der Verstelleinheit verbunden sein. Insbesondere ist das erste Federelement zwischen der Verstelleinheit, insbesondere dem Gehäuse der Verstelleinheit, und der Wandung des geschützten Fahrzeugs angeordnet. Das zweite Federelement ist vorzugsweise zwischen der Verstelleinheit, insbesondere dem Gehäuse der Verstelleinheit, und einem Zwischenboden des geschützten Fahrzeugs oder der geschützten Fahrzeugzelle angeordnet. Der Zwischenboden kann zwischen der Wandung und der Bodenwandung angeordnet sein, wobei der Zwischenboden jedoch bevorzugt näher an der Bodenwandung als an der Wandung platziert ist. Der Zwischenboden ist mit einer tragenden Struktur der geschützten Fahrzeugzelle fest verbunden. Für den Fall, dass auf den Zwischenboden verzichtet wird, kann das zweite Federelement zwischen der Verstelleinheit und der Bodenwandung angeordnet sein. Das erste Federelement kann eine Druckfeder sein. Das zweite Federelement kann eine Zugfeder sein. Demgemäß wird das erste Federelement bei dem Verbringen des Tragelements von dem eingefahrenen Zustand in den ausgefahrenen Zustand komprimiert, wobei das zweite Federelement gelängt wird. Demgemäß wird bei dem Verbringen des Tragelements von dem ausgefahrenen Zustand in den eingefahrenen Zustand das komprimierte erste Federelement gelängt, wobei das zweite gelängte Federelement komprimiert wird. Mit anderen Worten drückt das erste Federelement das Tragelement mitsamt dem Besatzungsmitglied von dem ausgefahrenen Zustand in den eingefahrenen Zustand. Dementsprechend zieht das zweite Federelement das Tragelement mitsamt dem Besatzungsmitglied von dem ausgefahrenen Zustand in den eingefahrenen Zustand.

Das Überrollschutzsystem weist ein Dämpfungselement zum Verzögern des Tragelements vor einem Erreichen des eingefahrenen Zustands auf.

Mit Hilfe des Dämpfungselements wird das Tragelement vor dem Erreichen des eingefahrenen Zustands abgebremst. Hierdurch werden Verletzungen des Besatzungsmitglieds durch zu hohe Verzögerungen verhindert. Im einfachsten Fall kann das Dämpfungselement ein aus einem Elastomer, wie beispielsweise Gummi, gefertigter Dämpfungsblock sein.

Gemäß einer weiteren Ausführungsform außerhalb der Erf indung ist das Dämpfungselement ein Pneumatikzylinder oder ein Hydropneumatikzylinder.

Das Dämpfungselement kann mit der Bodenwandung und/oder dem Zwischenboden verbunden sein. Das Dämpfungselement wechselwirkt vorzugsweise mit der Verstelleinheit oder mit dem an der Verstelleinheit montierten Tragelement derart, dass die Verstelleinheit oder das Tragelement vor dem Erreichen des eingefahrenen Zustands abgebremst wird. Für den Fall, dass das Dämpfungselement ein Pneumatikzylinder ist, kann dieses ein Gehäuse aufweisen, das an der Bodenwandung und/oder an dem Zwischenboden montiert ist. In dem Gehäuse kann ein entlang und entgegen der y-Richtung linear verschieblicher Kolben aufgenommen sein. Das Gehäuse ist zumindest abschnittsweise mit einem Gas, wie beispielsweise Luft oder Stickstoff, gefüllt. Wird das Tragelement in den eingefahrenen Zustand bewegt, kommt die Verstelleinheit, insbesondere deren Gehäuse, oder das Tragelement selbst mit dem Kolben in Kontakt, wodurch der Kolben in das Gehäuse hineingeschoben wird. Das in dem Gehäuse aufgenommene Gas wird komprimiert, wodurch das Tragelement mit dem Besatzungsmitglied abgebremst wird.

Das Dämpfungselement weist einen Gurtwickler und einen auf den Gurtwickler aufwickelbaren und von diesem abwickelbaren Gurt auf.

Der Gurt kann vorzugsweise mit der Verstelleinheit, insbesondere mit dem Gehäuse der Verstelleinheit, fest verbunden sein. Der Gurtwickler kann an der Wandung des geschützten Fahrzeugs oder der geschützten Fahrzeugzelle montiert sein. Der Gurt kann aus einem Gewebe, insbesondere aus einem Kunststoffgewebe, gefertigt sein. Der Gurt kann ein Abreißgurt sein. Der Gurt kann daher auch als Abreißgurt bezeichnet werden. Unter einem "Abreißgurt" ist vorliegend ein aus einem Gewebe, insbesondere aus einem Kunststoffgewebe, gefertigtes bandförmiges Bauteil zu verstehen, das bei einer vorbestimmten Auslösekraft einreißt oder durchreißt. Die Auslösekraft kann durch eine geeignete Dimensionierung des Gurts in einem weiten Bereich eingestellt werden. Der Gurt kann auch in mehreren Schlaufen zusammengenäht sein, wobei die Schlaufen miteinander verbindende Nähte bei unterschiedlichen Auslösekräften reißen. Hierdurch kann der Gurt beispielsweise zum stufenweisen Abbremsen des Tragelements eingesetzt werden. Es kann optional auch ein Gurtwickler eingesetzt werden, welcher ab einer bestimmten Abwicklungsgeschwindigkeit des Gurts den Gurt blockiert. Der Gurt kann dabei elastisch verformbar sein, so dass dieser erst ab einer bestimmten Länge reißt. Ferner kann auch ein Gurtwickler eingesetzt werden, der ab einer bestimmten Abwickellänge des Gurts blockiert.

Gemäß einer weiteren Ausführungsform weist das Überrollschutzsystem einen Schalter zum Auslösen des Aktors auf, so dass dieser das Tragelement ohne einen Überschlag des geschützten Fahrzeugs von dem ausgefahrenen Zustand in den eingefahrenen Zustand verbringt.

Hierdurch kann eine Doppelfunktion des Überrollschutzsystems verwirklicht werden. Das Überrollschutzsystem kann somit nicht nur für einen Schutz des Besatzungsmitglieds bei einem Überschlag des geschützten Fahrzeugs, sondern beispielsweise auch bei einem Beschuss des geschützten Fahrzeugs eingesetzt werden. Das Besatzungsmitglied kann dann mit Hilfe des Schalters den Aktor auslösen, wodurch das Tragelement von dem ausgefahrenen Zustand in den eingefahrenen Zustand verbracht wird. Das Besatzungsmitglied ist dann innerhalb des Innenraums angeordnet und vor dem Beschuss geschützt. Mit Hilfe des Schalters kann somit die Sensorik überbrückt und der Aktor direkt ausgelöst werden. Der Schalter kann drahtlos oder drahtgebunden mit der Regel- und Steuereinheit wirkverbunden sein. Es kann alternativ auch eine direkte Wirkverbindung zwischen dem Schalter und dem Aktor vorgesehen sein. Zusätzlich oder alternativ kann auch eine Schussdetektionssensorik vorgesehen sein, die beispielsweise einen in Richtung des geschützten Fahrzeugs abgegebenen Schuss, insbesondere optisch und/oder akustisch, detektiert. Beispielsweise kann die Schussdetektionssensorik mehrere Sensoren aufweisen, die an verschiedenen Positionen an dem geschützten Fahrzeug angebracht sind. Die Schussdetektionssensorik kann mit der Regel- und Steuereinheit direkt verbunden sein. Basierend auf Sensorsignalen der Schussdetektionssensorik entscheidet die Regel- und Steuereinheit, ob ein abgeschossenes Projektil dem Besatzungsmitglied schaden kann oder nicht. Im Falle einer hohen Wahrscheinlichkeit eines Schadens für das Besatzungsmitglied durch das Projektil steuert die Regel- und Steuereinheit den Aktor an, um das Tragelement von dem ausgefahrenen Zustand in den eingefahrenen Zustand zu verbringen. Die Schussdetektionssensorik kann aktiviert oder deaktiviert werden. Hierzu kann ein optionaler weiterer Schalter vorgesehen sein.

Ferner wird ein geschütztes Fahrzeug mit zumindest einem derartigen Überrollschutzsystem vorgeschlagen.

Das geschützte Fahrzeug kann mehrere derartige Überrollschutzsysteme aufweisen. Beispielsweise kann das geschützte Fahrzeug mehrere Lukenöffnungen aufweisen, wobei jeder Lukenöffnung ein derartiges Überrollschutzsystem zugeordnet sein kann. Es muss jedoch nicht zwingend jeder Lukenöffnung ein derartiges Überrollschutzsystem zugeordnet sein. Das geschützte Fahrzeug ist insbesondere ein militärisches Fahrzeug. Das geschützte Fahrzeug kann daher auch als Militärfahrzeug bezeichnet werden. Insbesondere ist das geschützte Fahrzeug ein gepanzertes Transportfahrzeug. Das geschützte Fahrzeug kann beispielsweise auch ein Schützenpanzer, ein Kampfpanzer, ein Bergepanzer, ein Minenräumpanzer, ein Spürpanzer oder dergleichen sein. Das geschützte Fahrzeug kann insbesondere auch ein Radpanzer sein. Das geschützte Fahrzeug kann als geschütztes Militärfahrzeug bezeichnet werden. Wie zuvor erwähnt, umfasst das geschützte Fahrzeug die geschützte Fahrzeugzelle. Die geschützte Fahrzeugzelle ist bevorzugt in der Art eines austauschbaren Missionsmoduls gestaltet.

Besonders bevorzugt umfasst das geschützte Fahrzeug ein Überrollschutzsystem mit einem Tragelement zum Tragen eines Besatzungsmitglieds und einem dem Tragelement zugeordneten Aktor, wobei der Aktor dazu eingerichtet ist, das Tragelement unmittelbar vor oder bei einem Überschlag des geschützten Fahrzeugs von einem ausgefahrenen Zustand, in dem sich das Besatzungsmitglied teilweise innerhalb und teilweise außerhalb des geschützten Fahrzeugs aufhält, in einen eingefahrenen Zustand, in dem sich das Besatzungsmitglied vollständig innerhalb des geschützten Fahrzeugs aufhält, zu verbringen, so dass das Besatzungsmitglied während des Überschlags des geschützten Fahrzeugs geschützt ist.

Außerdem wird eine geschützte Fahrzeugzelle für ein derartiges geschütztes Fahrzeug vorgeschlagen. Die geschützte Fahrzeugzelle umfasst ein Überrollschutzsystem mit einem Tragelement zum Tragen eines Besatzungsmitglieds und einem dem Tragelement zugeordneten Aktor, wobei der Aktor dazu eingerichtet ist, das Tragelement unmittelbar vor oder bei einem Überschlag der geschützten Fahrzeugzelle von einem ausgefahrenen Zustand, in dem sich das Besatzungsmitglied teilweise innerhalb und teilweise außerhalb der geschützten Fahrzeugzelle aufhält, in einen eingefahrenen Zustand, in dem sich das Besatzungsmitglied vollständig innerhalb der geschützten Fahrzeugzelle aufhält, zu verbringen, so dass das Besatzungsmitglied während des Überschlags der geschützten Fahrzeugzelle geschützt ist.

Die für das vorgeschlagene Überrollschutzsystem beschriebenen Ausführungsformen und Merkmale gelten für das vorgeschlagene geschützte Fahrzeug entsprechend und umgekehrt.

"Ein" ist vorliegend nicht zwingend als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine Beschränkung auf genau die genannte Anzahl von Elementen gegeben ist. Vielmehr sind zahlenmäßige Abweichungen nach oben und nach unten möglich, soweit nichts Gegenteiliges angegeben ist.

Weitere mögliche Implementierungen des Überrollschutzsystems und/oder des geschützten Fahrzeugs umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Überrollschutzsystems und/oder des geschützten Fahrzeugs hinzufügen.

Weitere vorteilhafte Ausgestaltungen und Aspekte des Überrollschutzsystems und/oder des geschützten Fahrzeugs sind Gegenstand der Unteransprüche sowie der im Folgenden beschriebenen Ausführungsbeispiele des Überrollschutzsystems und/oder des geschützten Fahrzeugs. Im Weiteren werden das Überrollschutzsystem und/oder das geschützte Fahrzeug anhand von bevorzugten Ausführungsformen unter Bezugnahme auf die beigelegten Figuren näher erläutert.
- Fig. 1: zeigt eine schematische Seitenansicht einer Ausführungsform eines geschützten Fahrzeugs;
- Fig. 2: zeigt eine schematische Aufsicht einer Ausführungsform eines Überrollschutzsystems für das geschützte Fahrzeug gemäß Fig. 1;
- Fig. 3: zeigt eine schematische Schnittansicht des Überrollschutzsystems gemäß der Schnittlinie III-III der Fig. 2;
- Fig. 4: zeigt eine weitere schematische Schnittansicht des Überrollschutzsystems gemäß der Schnittlinie III-III der Fig. 2;
- Fig. 5: zeigt eine schematische Detailansicht einer Ausführungsform einer Verstelleinheit für das Überrollschutzsystems gemäß Fig. 2;
- Fig. 6: zeigt eine schematische Schnittansicht einer weiteren Ausführungsform eines Überrollschutzsystems für das geschützte Fahrzeug gemäß Fig. 1;
- Fig. 7: zeigt eine weitere schematische Schnittansicht des Überrollschutzsystems gemäß Fig. 6; und
- Fig. 8: zeigt eine weitere schematische Schnittansicht des Überrollschutzsystems gemäß Fig. 6.

In den Figuren sind gleiche oder funktionsgleiche Elemente mit denselben Bezugszeichen versehen worden, sofern nichts anderes angegeben ist.

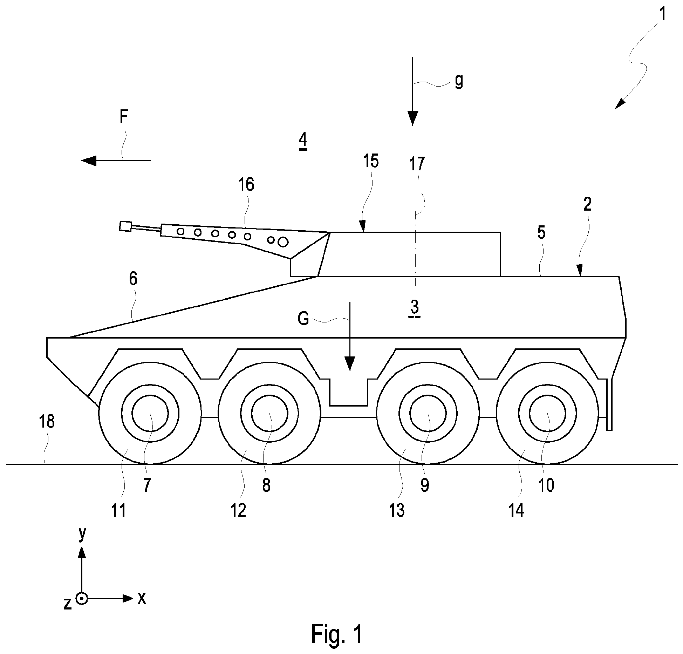

Die Fig. 1 zeigt eine schematische Seitenansicht einer Ausführungsform eines geschützten Fahrzeugs 1.

Das geschützte Fahrzeug 1 wird nachfolgend lediglich als Fahrzeug bezeichnet. Das Fahrzeug 1 kann ein militärisches Fahrzeug, insbesondere ein militärisches Nutzfahrzeug, sein. Das Fahrzeug 1 kann daher auch als Militärfahrzeug oder als Militärnutzfahrzeug bezeichnet werden. Insbesondere ist das Fahrzeug 1 ein gepanzertes Transportfahrzeug. Das Fahrzeug 1 kann beispielsweise auch ein Schützenpanzer, ein Kampfpanzer, ein Bergepanzer, ein Minenräumpanzer, ein Spürpanzer oder dergleichen sein. Das Fahrzeug 1 kann auch ein Radpanzer sein.

Das Fahrzeug 1 umfasst eine geschützte Fahrzeugzelle 2. Im Folgenden wird die geschützte Fahrzeugzelle 2 lediglich als Fahrzeugzelle bezeichnet. Die Fahrzeugzelle 2 kann eine Fahrzeugwanne sein und daher auch als solche bezeichnet werden. Die Begriffe "Fahrzeugzelle" und "Fahrzeugwanne" sind daher beliebig gegeneinander tauschbar. Das Fahrzeug 1 kann bewaffnet oder unbewaffnet sein. Das Fahrzeug 1 kann ein Fahrzeuggewicht von über 20 Tonnen aufweisen.

Die Fahrzeugzelle 2 ist gepanzert. Die Fahrzeugzelle 2 ist insbesondere gegen Beschuss, Sprengfallen, unkonventionelle Spreng- oder Brandvorrichtungen (USBV, Engl.: Improvised Explosive Devices, IED), Minen oder dergleichen geschützt. Die Fahrzeugzelle 2 umschließt einen Fahrzeuginnenraum oder Innenraum 3, in dem sich eine Besatzung des Fahrzeugs 1 aufhalten kann. Der Innenraum 3 ist über nicht gezeigte Türen und/oder Luken von einer Umgebung 4 des Fahrzeugs 1 her zugänglich. Der Innenraum 3 kann in mehrere Abschnitte oder Räume unterteilt sein, die voneinander getrennt sein können. Beispielsweise kann der Innenraum 3 in einen Maschinenraum, einen Besatzungsraum und/oder in einen Fahrzeugführerraum unterteilt sein. Dies ist jedoch nicht zwingend erforderlich.

Die Fahrzeugzelle 2 kann ferner zumindest teilweise oder vollständig modular ausgetauscht werden. In diesem Fall kann das Fahrzeug 1 unterschiedliche Missionsmodule, Missionskits oder Rüstsätze aufweisen, die beliebig austauschbar sind. Als Beispiel für ein derartiges Missionsmodul kann ein Sanitätsmodul genannt werden. Dieser zuvor erläuterte modulare Aufbau ist jedoch beliebig. Die Fahrzeugzelle 2 umfasst beispielsweise ein Dach 5 und eine geneigt zu dem Dach 5 angeordnete Vorderwand 6.

Das Fahrzeug 1 kann ein Radfahrzeug oder ein Kettenfahrzeug sein. Nachfolgend wird jedoch davon ausgegangen, dass das Fahrzeug 1 ein Radfahrzeug ist. Das Fahrzeug 1 umfasst mehrere Radachsen 7, 8, 9, 10, an denen Räder 11, 12, 13, 14 vorgesehen sind. Beispielsweise sind vier Radachsen 7, 8, 9, 10 mit acht Rädern 11, 12, 13, 14 vorgesehen. Es können jedoch auch weniger oder mehr als vier Radachsen 7, 8, 9, 10 vorgesehen sein. Unter einer "Radachse" ist vorliegend eine Achse zu verstehen, um die sich das jeweilige Rad 11, 12, 13, 14 dreht.

Die Anzahl der Radachsen 7, 8, 9, 10 ist grundsätzlich beliebig. Beispielsweise können vier Radachsen 7, 8, 9, 10 oder drei Radachsen 7, 8, 9, 10 vorgesehen sein. Jeder Radachse 7, 8, 9, 10 sind zwei Räder 11, 12, 13, 14 zugeordnet. Zumindest die Räder 11, 12 sind lenkbar. Bevorzugt sind jedoch alle Räder 11, 12, 13, 14 lenkbar. Vorzugsweise umfasst das Fahrzeug 1 einen Allradantrieb. Das heißt, alle Radachsen 7, 8, 9, 10 sind angetrieben.

Das Fahrzeug 1 kann einen Turm 15 mit einer Bewaffnung 16 aufweisen. Der Turm 15 ist drehbar an der Fahrzeugzelle 2 gelagert. Der Turm 15 kann eine elektrische oder hydraulische Antriebseinheit umfassen, um den Turm 15 um eine Drehachse 17 relativ zu der Fahrzeugzelle 2 zu drehen. Der Turm 15 kann jedoch auch manuell betrieben werden, falls die Antriebseinheit ausfällt. Die Bewaffnung 16 kann eine Maschinenkanone oder dergleichen sein. Die Bewaffnung 16 kann eine Primärbewaffnung oder Hauptbewaffnung sein. Es kann zusätzlich eine Sekundärbewaffnung, beispielsweise in Form eines Maschinengewehrs, vorgesehen sein.

Dem Fahrzeug 1 ist ein Koordinatensystem mit einer ersten Raumrichtung, Längsrichtung oder x-Richtung x, einer zweiten Raumrichtung, Hochrichtung oder y-Richtung y und einer dritten Raumrichtung, Querrichtung oder z-Richtung z zugeordnet. Die Richtungen x, y, z sind senkrecht zueinander orientiert. Eine Bewegung des Fahrzeugs 1 um die x-Richtung x kann als Rollen oder Rollbewegung bezeichnet werden. Eine Bewegung des Fahrzeugs 1 um die y-Richtung y kann als Gieren oder Gierbewegung bezeichnet werden. Eine Bewegung des Fahrzeugs 1 um die z-Richtung z kann als Nicken oder Nickbewegung bezeichnet werden.

Eine Schwerkraftrichtung g kann im Wesentlichen entgegen der y-Richtung y orientiert sein. Eine Gewichtskraft G des Fahrzeugs 1 wirkt entlang der Schwerkraftrichtung g. Das Fahrzeug 1 kann sich entlang einer Fahrtrichtung F und entgegen der Fahrtrichtung F auf einem Boden oder Untergrund 18 fortbewegen. Die Fahrtrichtung F kann entgegen der x-Richtung x orientiert sein. Der Untergrund 18 kann eine Fahrbahn oder ein beliebiges Gelände sein.

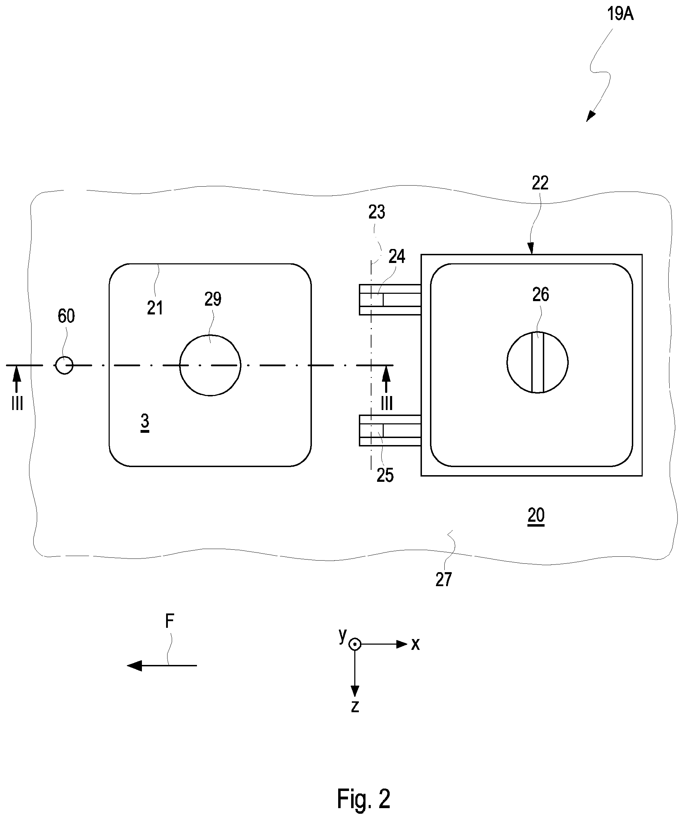

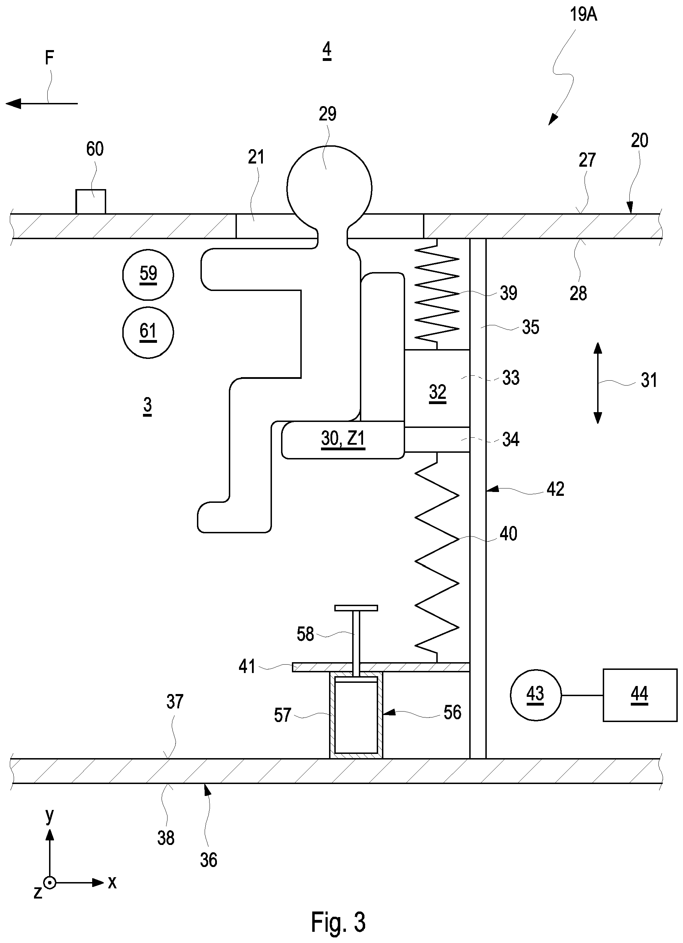

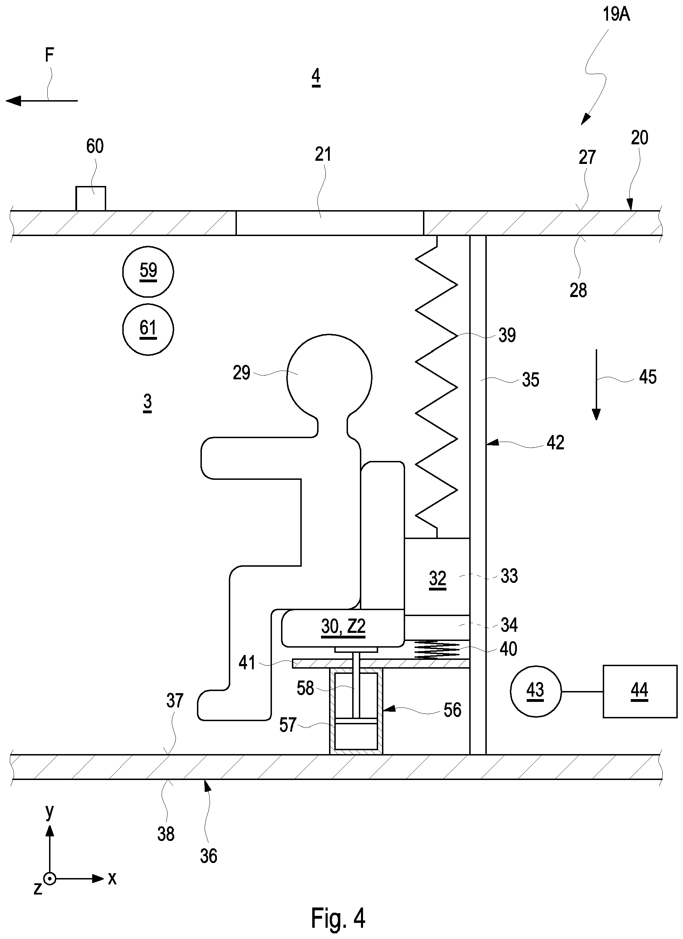

Die Fig. 2 zeigt eine schematische Aufsicht einer Ausführungsform eines Überrollschutzsystems 19A für das Fahrzeug 1. Die Fig. 3 zeigt eine schematische Schnittansicht des Überrollschutzsystems 19A. Die Fig. 4 zeigt eine weitere schematische Schnittansicht des Überrollschutzsystems 19A. Nachfolgend wird auf die Fig. 2 bis 4 gleichzeitig Bezug genommen.

An einer Wandung 20 der Fahrzeugzelle 2, insbesondere an dem Dach 5 oder an der Vorderwand 6, ist eine Lukenöffnung 21 vorgesehen, über welche der Innenraum 3 in die Umgebung 4 verlassen oder der Innenraum 3 von der Umgebung 4 aus betreten werden kann. Die Wandung 20 kann beispielsweise Teil des Dachs 5 oder der Vorderwand 6 sein. Die Wandung 20 kann horizontal verlaufen. Die Wandung 20 kann jedoch auch schräg oder vertikal angeordnet sein.

Das Fahrzeug 1 kann beliebig viele Lukenöffnungen 21 aufweisen. Beispielsweise kann auch an dem Turm 15 eine derartige Lukenöffnung 21 vorgesehen sein. Demgemäß kann die Wandung 20 auch Teil des Turms 15 sein. Die Lukenöffnung 21 kann eine beliebige Geometrie aufweisen. Beispielsweise kann die Lukenöffnung 21 rechteckförmig oder rund sein. Entlang der z-Richtung z betrachtet kann die Lukenöffnung 21 links oder rechts von dem Turm 15 platziert sein.

Der Lukenöffnung 21 ist ein Lukendeckel 22 zugeordnet, mit dessen Hilfe die Lukenöffnung 21 verschlossen werden kann. Der Lukendeckel 22 ist in den Fig. 3 und 4 nicht gezeigt. Der Lukendeckel 22 kann ein Klapplukendeckel, ein Schiebelukendeckel, ein Hublukendeckel oder ein Deckel mit einer kombinierten translatorischen und rotatorischen Öffnungs- und Schließbewegung sein. Nachfolgend wird davon ausgegangen, dass der Lukendeckel 22 ein Klapplukendeckel ist. Das heißt, dass der Lukendeckel 22 um eine Drehachse 23 drehbar an der Wandung 20 gelagert ist. Die Drehachse 23 kann parallel zu der z-Richtung z verlaufen.

Dabei kann der Lukendeckel 22 von einer nicht gezeigten geschlossenen Position in eine in der Fig. 2 gezeigte geöffnete Position verbracht werden. Der Lukendeckel 22 kann in seiner geöffneten Position verriegelt werden, so dass sich der Lukendeckel 22 auch bei einem Überschlag des Fahrzeugs 1 nicht selbsttätig schließen kann.

Der Lukendeckel 22 ist mit Hilfe von Scharnieren 24, 25 an der Wandung 20 angeschlagen. In der geöffneten Position kann der Lukendeckel 22 auf der Wandung 20 aufliegen. Dies ist jedoch nicht zwingend erforderlich. Der Lukendeckel 22 kann in der geöffneten Position auch nicht an der Wandung 20 anliegen. Der Lukendeckel 22 kann eine Verriegelungseinheit 26 zum Verriegeln und Entriegeln des Lukendeckels 22 aufweisen. Die Wandung 20 weist eine der Umgebung 4 zugewandte Außenseite 27 auf. Eine der Außenseite 27 abgewandte Innenseite 28 der Wandung 20 ist dem Innenraum 3 zugewandt.

Bei einem derartigen Fahrzeug 1 kann es unter anderem aufgrund der unübersichtlichen Fahrzeuggeometrie erforderlich sein, dass einzelne Besatzungsmitglieder 29 über Luke fahren. Dies kann stehend oder sitzend erfolgen. "Über Luke" heißt dabei, dass zumindest der Kopf des jeweiligen Besatzungsmitglieds 29 aus der Lukenöffnung 21 in die Umgebung 4 hineinragt. Dies kann zum Beispiel für die Unterstützung des Fahrers durch den Kommandanten oder für eine bessere Führbarkeit des Fahrzeugs 1 im zivilen Straßenverkehr erforderlich sein. Dieser Umstand kann dazu führen, dass im Falle eines Überschlags des Fahrzeugs 1 das über Luke fahrende Besatzungsmitglied 29 tödlichen Gefahren ausgesetzt ist. Im schlimmsten Fall kann es dazu kommen, dass das Besatzungsmitglied 29 durch das Fahrzeug 1 zerquetscht und somit tödlich verletzt wird.

Um die vorgenannte Problematik zu entschärfen, ist das nachfolgend erläuterte Überrollschutzsystem 19A vorgesehen. Jeder Lukenöffnung 21 des Fahrzeugs 1 kann ein derartiges Überrollschutzsystem 19A zugeordnet sein. Je Lukenöffnung 21 kann genau ein Überrollschutzsystem 19A vorgesehen sein. Das Überrollschutzsystem 19A ist insbesondere auch für Fahrzeuggewichte von über 20 Tonnen geeignet.

Das Überrollschutzsystem 19A umfasst ein entlang der y-Richtung y höhenverstellbares Tragelement 30, auf dem das Besatzungsmitglied 29 Platz nehmen kann. Das Tragelement 30 kann ein Sitz für das Besatzungsmitglied 29 sein. Demgemäß können vorliegend die Begriffe "Tragelement" und "Sitz" beliebig gegeneinander getauscht werden. Alternativ kann das Tragelement 30 auch eine Stehplattform für das Besatzungsmitglied 29 sein. Das Besatzungsmitglied 29 kann an einer derartigen Stehplattform festgeschnallt sein, so dass das Besatzungsmitglied 29 bei einem Überschlag des Fahrzeugs 1 nicht aus der Fahrzeugzelle 2 herausgeschleudert werden kann.

Nachfolgend wird jedoch davon ausgegangen, dass das Überrollschutzsystem 19A ein Tragelement 30 in Form eines Sitzes umfasst. Das Tragelement 30 kann an der Wandung 20 aufgehängt sein, wie nachfolgend noch erläutert wird. Das Besatzungsmitglied 29 ist an oder auf dem Tragelement 30 in Form eines Sitzes festgeschnallt, so dass das Besatzungsmitglied 29 auch in diesem Fall bei einem Überschlag des Fahrzeugs 1 nicht aus der Fahrzeugzelle 2 herausgeschleudert werden kann.

Das Tragelement 30 kann entlang der y-Richtung y nach oben und entgegen der y-Richtung y nach unten verfahren werden, wie in der Fig. 3 mit Hilfe eines Doppelpfeils 31 dargestellt ist. Hierdurch kann das Besatzungsmitglied 29 das Tragelement 30 derart einstellen, dass das Besatzungsmitglied 29 im Sitzen über Luke fahren kann. Diese Höhenverstellung des Tragelements 30 kann pneumatisch, hydraulisch, manuell, elektrisch oder durch eine Kombination dieser Wirkprinzipien erfolgen.

Das Tragelement 30 kann an der Fahrzeugzelle 2, insbesondere an dem Dach 5 oder an der Vorderwand 6, aufgehängt sein. Das Besatzungsmitglied 29 ist an oder auf dem Tragelement 30 festgeschnallt, so dass das Besatzungsmitglied 29 bei einem Überschlag des Fahrzeugs 1 nicht aus der Fahrzeugzelle 2 herausgeschleudert werden kann.

Dem Tragelement 30 ist eine Verstelleinheit 32 zugeordnet, mit deren Hilfe das Tragelement 30 entlang und entgegen der y-Richtung y bewegt werden kann. Für den Fall, dass das Tragelement 30 ein Sitz ist, kann die Verstelleinheit 32 demgemäß als Sitzverstelleinheit bezeichnet werden. Demgemäß sind vorliegend die Begriffe "Verstelleinheit" und "Sitzverstelleinheit" gegeneinander tauschbar.

Mit dieser Verstelleinheit 32 kann die zuvor erwähnte Höhenverstellung des Tragelements 30 vorgenommen haben. Das Tragelement 30 kann fest mit der Verstelleinheit 32 verbunden sein. Die Verstelleinheit 32 wird vorliegend elektrisch angetrieben. Hierzu umfasst die Verstelleinheit 32 ein Antriebselement 33, insbesondere einen Antriebsmotor, und eine Verriegelung 34. Die Verstelleinheit 32 ist Teil des Überrollschutzsystems 19A. Das Antriebselement 33 ist ein Elektromotor.

Der Verstelleinheit 32 ist an einer entlang der y-Richtung y verlaufenden Führung 35 derart gelagert, dass die Verstelleinheit 32 zusammen mit dem Tragelement 30 und dem darauf sitzenden Besatzungsmitglied 29 entlang und entgegen der y-Richtung y verfahren werden kann, wie mit Hilfe des Doppelpfeils 31 in der Fig. 3 angedeutet ist. Die Führung 35 ist eine Linearführung und kann daher auch als solche bezeichnet werden. Die Führung 35 kann an der Wandung 20 aufgehängt sein. Hierzu kann die Führung 35 mit der Innenseite 28 der Wandung 20 verbunden, beispielsweise verschweißt, sein.

Zusätzlich oder optional kann die Führung 35 mit einer Bodenwandung 36 verbunden sein, die entlang der y-Richtung y betrachtet von der Wandung 20 beabstandet angeordnet ist. Die Bodenwandung 36 weist eine dem Innenraum 3 zugewandte Innenseite 37 und eine dem Innenraum 3 abgewandte Außenseite 38 auf. Die Außenseite 38 ist somit der Umgebung 4 zugewandt. Die Bodenwandung 36 ist Teil der Fahrzeugzelle 2. Die Führung 35 kann mit der Innenseite 37 verbunden, beispielsweise verschweißt, sein. Die Führung 35 kann beispielsweise zwei Führungsschienen aufweisen, die entlang der z-Richtung z betrachtet voneinander beabstandet angeordnet sind.

Dem Überrollschutzsystem 19A ist ferner ein erstes Federelement 39 zugeordnet, das zwischen der Verstelleinheit 32 und der Wandung 20, insbesondere der Innenseite 28 der Wandung 20, platziert ist. Weiterhin weist das Überrollschutzsystem 19A ein zweites Federelement 40 auf, das zwischen der Verstelleinheit 32 und einem Zwischenboden 41 der Fahrzeugzelle 2 angeordnet ist. Der Zwischenboden 41 ist zwischen der Wandung 20 und der Bodenwandung 36 angeordnet, wobei der Zwischenboden 41 jedoch näher an der Bodenwandung 36 als an der Wandung 20 platziert ist. Der Zwischenboden 41 ist mit einer tragenden Struktur der Fahrzeugzelle 2 fest verbunden.

Das erste Federelement 39 kann eine Druckfeder sein. Das zweite Federelement 40 kann eine Zugfeder sein. Die Federelemente 39, 40 können dabei Zylinderfedern sein. Es können jedoch auch andere Federtypen eingesetzt werden. Insbesondere können die Federelemente 39, 40 Zug- und Druckfedern sein. Unter einer "Zug- und Druckfeder" ist vorliegend eine Feder zu verstehen, die sowohl Zug- als auch Druckkräfte aufnehmen kann. Es ist nicht erforderlich, dass genau zwei Federelemente 39, 40 vorgesehen sind. Es kann auch nur eines der Federelemente 39, 40 vorgesehen sein.

Die Verstelleinheit 32, die Führung 35, das erste Federelement 39 und das zweite Federelement 40 bilden einen Aktor 42 des Überrollschutzsystems 19A. Der Aktor 42 ist geeignet, das Tragelement 30 mitsamt dem Besatzungsmitglied 29 innerhalb weniger hundertstel Sekunden von einem in der Fig. 3 gezeigten ausgefahrenen Zustand Z1 in einen in der Fig. 4 gezeigten eingezogenen oder eingefahrenen Zustand Z2 zu verbringen. Der Aktor 42 kann auch geeignet sein, das Tragelement 30 von dem eingefahrenen Zustand Z2 zurück in den ausgefahrenen Zustand Z1 zu verbringen. Dies ist jedoch nicht zwingend erforderlich. Es ist somit eine Notabsenkung des Tragelements 30 möglich.

Das Überrollschutzsystem 19A umfasst ferner eine Sensorik 43. Die Sensorik 43 kann verschiedenste Sensoren umfassen. Beispielsweise kann die Sensorik 43 einen oder mehrere Neigungssensoren, einen oder mehrere Lagesensoren, einen oder mehrere Beschleunigungssensoren oder dergleichen aufweisen. Die Sensorik 43 ist mit einer Regel- und Steuereinheit 44 des Überrollschutzsystems 19A wirkverbunden. Die Wirkverbindung kann drahtgebunden oder drahtlos sein. Die Regel- und Steuereinheit 44 kann ein fahrzeuginternes System, wie beispielsweise ein CAN-Knoten (Engl.: Controller Area Network), oder ein beliebiges Steuergerät sein. Die Regel- und Steuereinheit 44 ist wiederum mit dem Aktor 42, insbesondere der Verstelleinheit 32, wirkverbunden. Auch hier kann die Wirkverbindung drahtgebunden oder drahtlos sein. Die Regel- und Steuereinheit 44 dient zur Datenauswertung und zur Weitergabe von Steuersignalen an die Verstelleinheit 32 und somit auch an den Aktor 42.

Mit Hilfe der Sensorik 43 kann beispielsweise eine Bewegung oder Verkippung des Fahrzeugs 1 um die x-Richtung x, um die y-Richtung y und/oder um die z-Richtung z erfasst werden. Die Bewegung oder Verkippung des Fahrzeugs 1 kann eine kombinierte Roll-, Gier- und/oder Nickbewegung sein. Wird ein bestimmter voreingestellter Grenzwert der Verkippung überschritten, so dass zu erwarten ist, dass sich das Fahrzeug 1 überschlägt, so steuert die Regel- und Steuereinheit 44 den Aktor 42, insbesondere die Verstelleinheit 32, derart an, dass der Aktor 42 das Tragelement 30 von dem ausgefahrenen Zustand Z1 (Fig. 3) in den eingefahrenen Zustand Z2 (Fig. 4) verbringt, wie in der Fig. 4 mit Hilfe eines Pfeils 45 angedeutet ist. Das Verbringen des Tragelements 30 von dem ausgefahrenen Zustand Z1 in den eingefahrenen Zustand Z2 kann innerhalb von Bruchteilen von Sekunden, beispielsweise innerhalb von etwa 20 bis 50 Millisekunden, erfolgen.

Unter einem "Überschlag" ist vorliegend insbesondere zu verstehen, dass sich das Fahrzeug 1 zumindest auf das Dach 5 oder auf die Vorderwand 6 dreht. Dies schließt jedoch nicht aus, dass sich das Fahrzeug 1 bei einem Überschlag auch zumindest einmal vollständig, das heißt um 360°, oder auch mehrfach um die x-Richtung x, die y-Richtung y und/oder die z-Richtung z dreht.

Die Sensorik 43 kann auch einen oder mehrere Sensoren umfassen, die dazu geeignet sind, zu erfassen, ob der Lukendeckel 22 geöffnet oder geschlossen ist. Sofern der Lukendeckel 22 geschlossen ist, kann das Überrollschutzsystem 19A und insbesondere der Aktor 42 deaktiviert sein. Dies verhindert ein unerwünschtes Auslösen des Überrollschutzsystems 19A bei geschlossener Lukenöffnung 21. Wie zuvor erwähnt, kann die Sensorik 43 aus diesem Grund dazu geeignet sein, zu erfassen, ob der Lukendeckel 22 geöffnet oder geschlossen ist. Im einfachsten Fall wird durch den geschlossenen Lukendeckel 22 ein an der Lukenöffnung 21 oder an dem Lukendeckel 22 montierter Schalter geöffnet oder geschlossen, der Teil der Sensorik 43 sein kann.

Die Sensorik 43 zur Überschlagsdetektion kann außerdem auch für weitere Komponenten des Fahrzeugs 1 genutzt werden, welche spezifische Lageinformationen des Fahrzeugs 1 benötigen. Dies betrifft beispielsweise eine Waffensensorik der Bewaffnung 16.

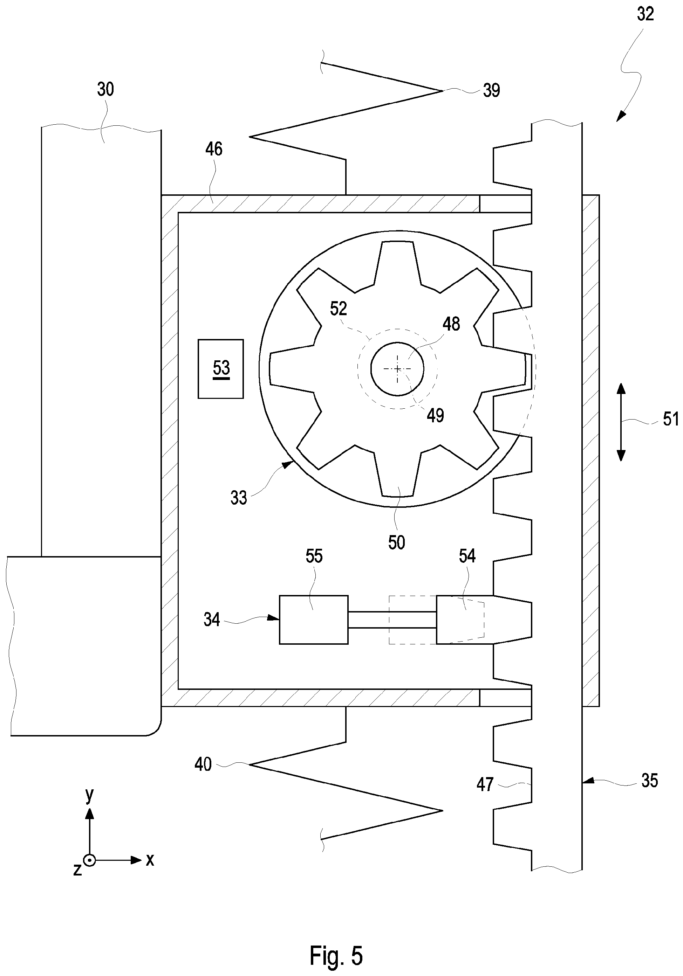

Die Fig. 5 zeigt eine schematische Detailansicht einer Ausführungsform einer wie zuvor erwähnten Verstelleinheit 32.

Wie zuvor erwähnt, ist die Verstelleinheit 32 Teil des Aktors 42. Die Verstelleinheit 32 umfasst eine Tragstruktur oder ein Gehäuse 46, an dem das Tragelement 30 befestigt ist. Beispielsweise ist das Tragelement 30 mit dem Gehäuse 46 verschraubt. Das Gehäuse 46 ist linear verschieblich an der Führung 35 gelagert. Hierzu kann eine Gleitlagerung oder auch eine Kugelführung vorgesehen sein. Das Gehäuse 46 kann die Führung 35 zumindest abschnittsweise umgreifen. Das Antriebselement 33 ist fest mit dem Gehäuse 46 verbunden. Die Federelemente 39, 40 können ebenfalls fest mit dem Gehäuse 46 verbunden sein.

Die Führung 35 kann eine Verzahnung 47 aufweisen. Alternativ kann die Führung 35 auch spindelförmig sein. In diesem Fall ist die Führung 35 drehbar gelagert. Das Antriebselement 33 umfasst eine Abtriebswelle 48, die um eine Drehachse 49 drehbar an oder in einem Stator des Antriebselements 33 gelagert ist. An der Abtriebswelle 48 ist ein Ritzel 50 angebracht, welches in die Verzahnung 47 eingreift. Mit Hilfe des Antriebselements 33 kann die Verstelleinheit 32 mitsamt dem Tragelement 30 entlang der y-Richtung y und entgegen der y-Richtung y verfahren werden, wie mit Hilfe eines Doppelpfeils 51 angedeutet ist.

Zwischen der Abtriebswelle 48 und dem Ritzel 50 ist eine Kupplung 52 vorgesehen, die die Abtriebswelle 48 derart mit dem Ritzel 50 koppelt, dass die Abtriebswelle 48 ein Antriebsmoment auf das Ritzel 50 aufbringen kann. Mit Hilfe der Kupplung 52 kann das Ritzel 50 jedoch auch von der Abtriebswelle 48 abgekuppelt werden, so dass die Abtriebswelle 48 kein Antriebsmoment mehr auf das Ritzel 50 aufbringen kann.

Das Ritzel 50 kann mit Hilfe der Kupplung 52 somit von einem angekuppelten Zustand, in dem die Abtriebswelle 48 ein Antriebsmoment auf das Ritzel 50 aufbringen kann, in einen abgekuppelten Zustand, in dem die Abtriebswelle 48 kein Antriebsmoment auf das Ritzel 50 aufbringen kann, und umgekehrt verbracht werden. In dem abgekuppelten Zustand kann sich das Ritzel 50 frei gegenüber der Abtriebswelle 48 drehen.

Zum Verbringen der Kupplung 52 von dem angekuppelten Zustand in den abgekuppelten Zustand und umgekehrt, ist ein Kupplungsstellelement 53 vorgesehen, das Teil der Verstelleinheit 32 ist. Das Kupplungsstellelement 53 kann in das Antriebselement 33 integriert sein. Das Kupplungsstellelement 53 kann ein Elektromotor, ein Pneumatikzylinder oder ein Hydraulikzylinder sein. Die Regel- und Steuereinheit 44 ist in Wirkverbindung mit dem Kupplungsstellelement 53, so dass dieses basierend auf Sensorsignalen der Sensorik 43 angesteuert werden kann, um das Ritzel 50 mit Hilfe der Kupplung 52 mit der Abtriebswelle 48 zu koppeln und von dieser zu entkoppeln.

Ferner weist die Verstelleinheit 32 ein Sperrelement 54 auf, das dazu eingerichtet ist, in die Verzahnung 47 einzugreifen. Dem Sperrelement 54 ist ein Stellelement 55 zugeordnet, das mit dem Sperrelement 54 gekoppelt ist. Beispielsweise ist das Stellelement 55 ein Linearmotor, der das Sperrelement 54 in Eingriff mit der Verzahnung 47 bringen kann, wie dies in der Fig. 5 mit Hilfe von durchgezogenen Linien dargestellt ist. Außerdem kann das Stellelement 55 das Sperrelement 54 auch außer Eingriff mit der Verzahnung 47 bringen, wie dies in der Fig. 5 mit Hilfe von gestrichelten Linien dargestellt ist. Das Stellelement 55 ist in Wirkverbindung mit der Regel- und Steuereinheit 44. Die Kupplung 52, das Kupplungsstellelement 53, das Sperrelement 54 und das Stellelement 55 bilden zusammen die Verriegelung 34 der Verstelleinheit 32.

Zum Verbringen des Tragelements 30 in den ausgefahrenen Zustand Z1, wird die Verstelleinheit 32 mitsamt dem Tragelement 30 entlang der y-Richtung y nach oben verfahren. Die Kupplung 52 befindet sich in ihrem angekuppelten Zustand. Das Sperrelement 54 greift noch nicht in die Verzahnung 47 ein. Bei dem nach oben Verfahren der Verstelleinheit 32 wird das erste Federelement 39 komprimiert und das zweite Federelement 40 wird gelängt. Befindet sich nun das Tragelement 30 in dem ausgefahrenen Zustand Z1, sind beide Federelemente 39, 40 vorgespannt. Die Kupplung 52 befindet sich nach wie vor in dem angekuppelten Zustand.

Das Sperrelement 54 wird nun mit Hilfe des Stellelements 55 in Eingriff mit der Verzahnung 47 gebracht. Die Kupplung 52 wird anschließend geöffnet, so dass das Ritzel 50 von der Abtriebswelle 48 abgekuppelt ist. Das Ritzel 50 lässt sich nun frei gegenüber der Abtriebswelle 48 drehen. Das Sperrelement 54 hält das Tragelement 30 in dem ausgefahrenen Zustand Z1.

Nun zurückkehrend zu den Fig. 3 und 4 wird das Tragelement 30, wie zuvor erwähnt, bei einem Überschlag oder einem drohenden Überschlag des Fahrzeugs 1 von dem ausgefahrenen Zustand Z1 in den eingefahrenen Zustand Z2 verbracht. Hierzu steuert die Steuer- und Regeleinheit 44 das Stellelement 55 basierend auf Sensorsignalen der Sensorik 43 derart an, dass das Stellelement 55 das Sperrelement 54 außer Eingriff mit der Verzahnung 47 bringt. Die Verriegelung 34 ist nun entriegelt.

Da beide Federelemente 39, 40 in dem ausgefahrenen Zustand Z1 des Tragelements 30 vorgespannt sind und die Verriegelung 34 entriegelt ist, drückt das erste Federelement 39 die Verstelleinheit 32 mitsamt dem Tragelement 30 entgegen der y-Richtung y nach unten. Gleichzeitig zieht das zweite Federelement 40 die Verstelleinheit 32 mitsamt dem Tragelement 30 ebenfalls entgegen der y-Richtung y nach unten, wie dies in der Fig. 4 mit Hilfe des Pfeils 45 angedeutet ist. Das Tragelement 30 wird so in wenigen hundertstel Sekunden von dem ausgefahrenen Zustand Z1 in den eingefahrenen Zustand Z2 verbracht. Das über Luke fahrende Besatzungsmitglied 29 wird so vollständig in den Innenraum 3 zurückgezogen, um Verletzungen zu entgehen.

Um zu verhindern, dass das Besatzungsmitglied 29 am Ende der Bewegung des Tragelements 30 von dem ausgefahrenen Zustand Z1 in den eingefahrenen Zustand Z2 einer zu großen Verzögerung ausgesetzt wird, weist das Überrollschutzsystem 19A ein Dämpfungselement 56 auf. Das Dämpfungselement 56 kann außerhalb der Erfindung ein Pneumatikzylinder sein. Das Dämpfungselement 56 kann außerhalb der Erf indung auch ein hydropneumatischer Zylinder sein. Das Dämpfungselement 56 kann an der Bodenwandung 36 und/oder an dem Zwischenboden 41 montiert sein.

Das Dämpfungselement 56 umfasst ein Gehäuse 57, das an der Bodenwandung 36 und/oder an dem Zwischenboden 41 montiert ist. In dem Gehäuse 57 ist ein entlang und entgegen der y-Richtung y linear verschieblicher Kolben 58 aufgenommen. Das Gehäuse 57 ist zumindest abschnittsweise mit einem Gas, wie beispielsweise Luft oder Stickstoff, gefüllt.

Wird das Tragelement 30 in den eingefahrenen Zustand Z2 bewegt, kommt die Verstelleinheit 32, insbesondere deren Gehäuse 46, oder das Tragelement 30 selbst mit dem Kolben 58 in Kontakt, wodurch der Kolben 58 in das Gehäuse 57 hineingeschoben wird, wie ein Vergleich der Fig. 3 und 4 zeigt. Das in dem Gehäuse 57 aufgenommene Gas wird komprimiert, wodurch das Tragelement 30 mit dem Besatzungsmitglied 29 abgebremst wird.

Befindet sich das Tragelement 30 nun in dem eingefahrenen Zustand Z2, kann das Ritzel 50 mit Hilfe der Kupplung 52 und des Kupplungsstellelements 53 wieder an die Abtriebswelle 48 angekuppelt werden. Das Stellelement 55 hält das Sperrelement 54 weiterhin außer Eingriff mit der Verzahnung 47. Die Verriegelung 34 ist entriegelt. Die Verstelleinheit 32 kann nun mitsamt dem Tragelement 30 wieder in den ausgefahrenen Zustand Z1 verbracht werden, indem das Antriebselement 33 das Tragelement 30 entlang der y-Richtung y nach oben bewegt. Das Überrollschutzsystem 19A ist nach einem erneuten Verriegeln der Verriegelung 34 dann wieder einsatzbereit.

Das Überrollschutzsystem 19A kann noch eine weitere Funktion aufweisen. Das Überrollschutzsystem 19A kann auch zum Schutz vor Beschuss dienen. Hierzu kann ein Schalter 59 vorgesehen sein, mit dessen Hilfe das Besatzungsmitglied 29 ohne einen Überschlag des Fahrzeugs 1 den Aktor 42 direkt auslösen kann, um das Tragelement 30 von dem ausgefahrenen Zustand Z1 in den eingefahrenen Zustand Z2 zu verbringen. In diesem Falle wird die Sensorik 43 umgangen.

Der Schalter 59 kann drahtlos oder drahtgebunden mit der Regel- und Steuereinheit 44 wirkverbunden sein. Es kann alternativ auch eine direkte Wirkverbindung zwischen dem Schalter 59 und dem Aktor 42 vorgesehen sein.

Zusätzlich oder alternativ kann auch noch eine Schussdetektionssensorik 60 vorgesehen sein, die beispielsweise einen in Richtung des Fahrzeugs 1 abgegebenen Schuss, beispielsweise optisch und/oder akustisch, detektiert. Die Schussdetektionssensorik 60 kann außenseitig an der Wandung 20 angebracht sein. Beispielsweise kann die Schussdetektionssensorik 60 mehrere Sensoren aufweisen, die an verschiedenen Positionen an dem Fahrzeug 1 angebracht sind. Die Schussdetektionssensorik 60 ist mit der Regel- und Steuereinheit 44 wirkverbunden. Die Wirkverbindung kann drahtgebunden oder drahtlos sein.

Basierend auf Sensorsignalen der Schussdetektionssensorik 60 entscheidet die Regel- und Steuereinheit 44, ob ein abgeschossenes Projektil dem Besatzungsmitglied 29 schaden kann oder nicht. Im Falle einer vorab zu definierenden Wahrscheinlichkeit eines Schadens für das Besatzungsmitglied 29 durch das Projektil, steuert die Regel- und Steuereinheit 44 den Aktor 42 an, um das Tragelement 30, wie zuvor erläutert, von dem ausgefahrenen Zustand Z1 in den eingefahrenen Zustand Z2 zu verbringen. Die Schussdetektionssensorik 60 kann aktiviert oder deaktiviert werden. Hierzu kann ein optionaler weiterer Schalter 61 vorgesehen sein.

Alternativ kann jedoch auch der Schalter 59 zum Aktivieren oder Deaktivieren der Schussdetektionssensorik 60 eingesetzt werden. Somit kann beispielsweise durch ein Betätigen des Schalters 59 nicht unmittelbar der Aktor 42 angesteuert, sondern nur die Schussdetektionssensorik 60 aktiviert werden. Besonders bevorzugt weist die Schussdetektionssensorik 60 jedoch den separaten Schalter 61 auf. Im Hinblick auf die Schalter 59, 61 kann vorliegend unter einem "Schalter" auch ein Bereich eines Berührbildschirms (Engl.: Touchscreen) eines Rechners oder einer anderen Bedieneinheit zu verstehen sein. Dieser Rechner kann Teil der Regel- und Steuereinheit 44 sein.

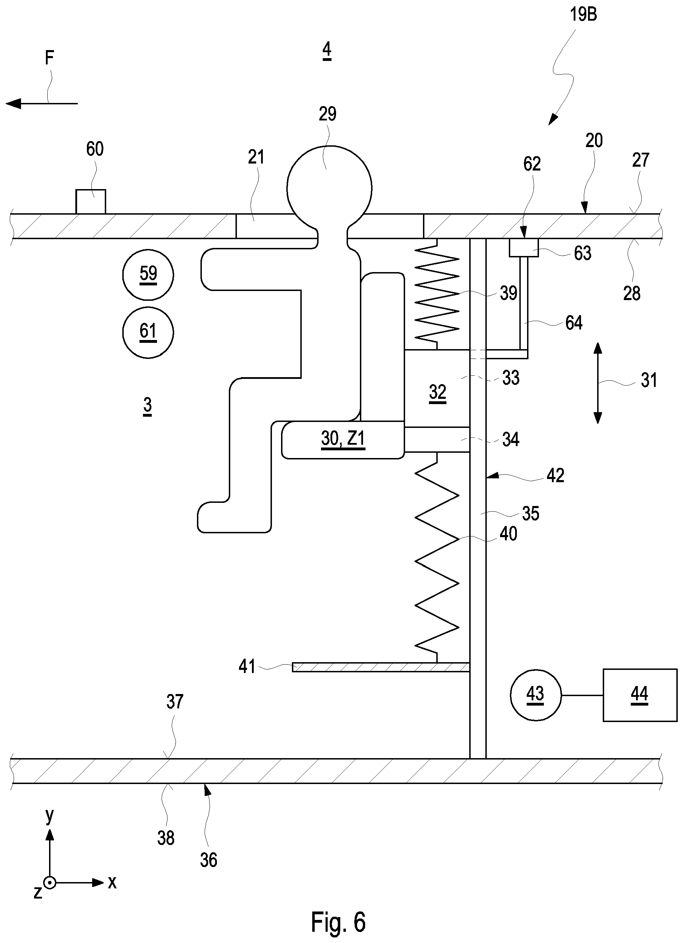

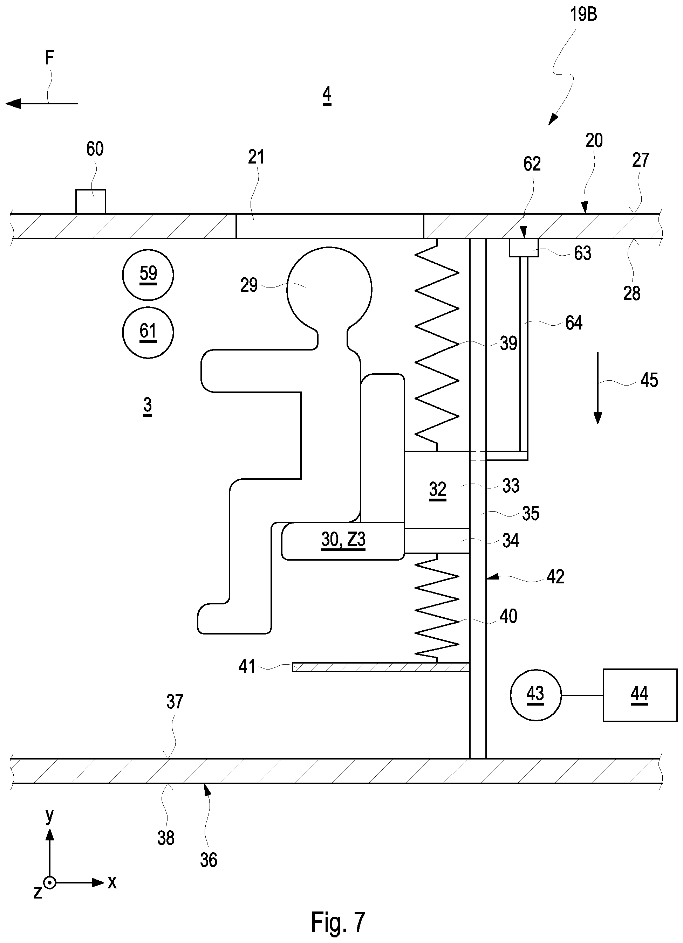

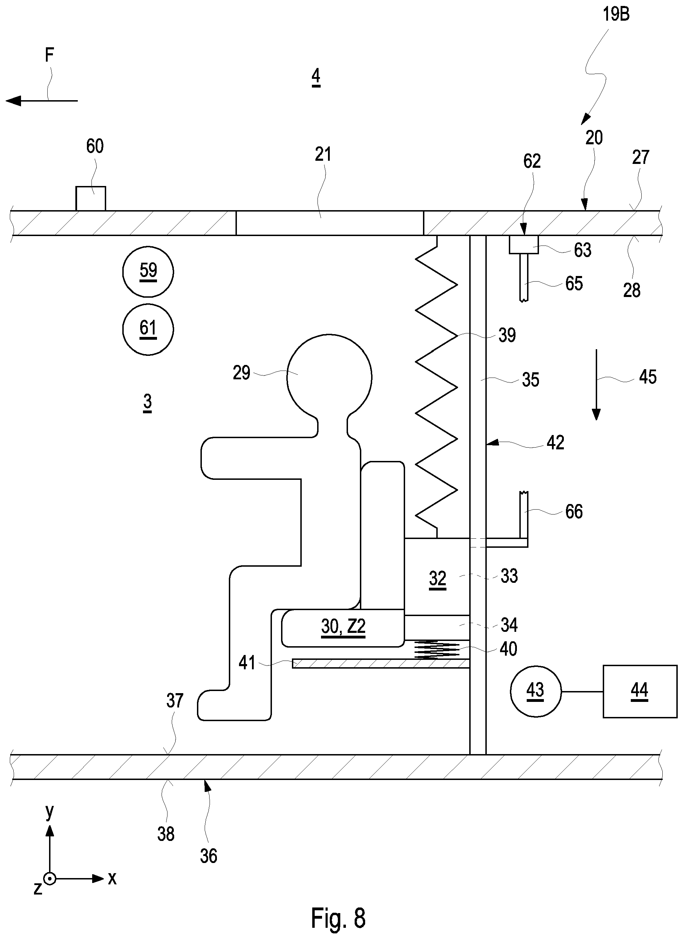

Die Fig. 6 zeigt eine schematische Schnittansicht einer weiteren Ausführungsform eines Überrollschutzsystems 19B für das Fahrzeug 1. Die Fig. 7 zeigt eine weitere schematische Schnittansicht des Überrollschutzsystems 19B. Die Fig. 8 zeigt eine weitere schematische Schnittansicht des Überrollschutzsystems 19B. Nachfolgend wird auf die Fig. 6 bis 8 gleichzeitig Bezug genommen.

Das Überrollschutzsystem 19B entspricht von seinem Aufbau und seiner Funktionalität her im Wesentlichen dem des Überrollschutzsystems 19A. Daher wird im Folgenden nur auf Unterschiede des Überrollschutzsystems 19B zu dem Überrollschutzsystem 19A eingegangen. Alle vorherigen Ausführungen betreffend das Überrollschutzsystem 19A sind entsprechend auf das Überrollschutzsystem 19B und umgekehrt anwendbar.

Im Unterschied zu dem Überrollschutzsystem 19A und gemäß der Erf indung weist das Überrollschutzsystem 19B kein Dämpfungselement 56 in Form eines Pneumatikzylinders oder eines hydropneumatischen Zylinders, sondern ein Dämpfungselement 62, umfassend einen Gurtwickler 63 und einen von dem Gurtwickler 63 abwickelbaren und auf den Gurtwickler 63 aufwickelbaren Gurt 64 auf. Der Gurt 64 kann aus einem Gewebe, insbesondere aus einem Kunststoffgewebe, gefertigt sein. Der Gurtwickler 63 kann mit der Wandung 20, insbesondere der Innenseite 28 der Wandung 20, fest verbunden sein.

Der Gurt 64 kann ein Abreißgurt sein. Der Gurt 64 kann daher auch als Abreißgurt bezeichnet werden. Unter einem "Abreißgurt" ist vorliegend ein aus einem Gewebe, insbesondere aus einem Kunststoffgewebe, gefertigtes bandförmiges Bauteil zu verstehen, das bei einer vorbestimmten Auslösekraft einreißt oder durchreißt. Die Auslösekraft kann durch eine geeignete Dimensionierung des Gurts 64 in einem weiten Bereich eingestellt werden. Der Gurt 64 kann auch in mehreren Schlaufen zusammengenäht sein, wobei die Schlaufen miteinander verbindende Nähte bei unterschiedlichen Auslösekräften reißen. Hierdurch kann der Gurt 64 beispielsweise zum Abbremsen eines fallenden Bauteils, vorliegend des Tragelements 30 mitsamt der Verstelleinheit 32, eingesetzt werden.

Wie zuvor mit Bezug auf das Überrollschutzsystem 19A erläutert, umfasst das Überrollschutzsystem 19B ebenfalls ein wie zuvor erläutertes Tragelement 30, eine das Tragelement 30 tragende Verstelleinheit 32, eine Führung 35, einen Aktor 42, der die Verstelleinheit 32 sowie zwei wie zuvor erläuterte Federelemente 39, 40 aufweist, eine Sensorik 43 und eine Regel- und Steuereinheit 44. Die Verstelleinheit 32 umfasst ein Antriebselement 33 und eine Verriegelung 34, wie dies zuvor mit Bezug auf die Fig. 5 erläutert wurde. Ferner kann das Überrollschutzsystem 19B auch wie zuvor erläuterte Schalter 59, 61 und/oder eine Schussdetektionssensorik 60 aufweisen. Der Gurt 64 kann mit dem Gehäuse 46 der Verstelleinheit 32 fest verbunden sein.

Wie zuvor schon mit Bezug auf das Überrollschutzsystem 19A erläutert, wird das Tragelement 30 bei einem Überschlag oder bei einem zu erwartenden Überschlag des Fahrzeugs 1 von einem in der Fig. 6 gezeigten ausgefahrenen Zustand Z1 in einen in der Fig. 8 gezeigten eingefahrenen Zustand Z2 verbracht. Hierzu steuert die Regel- und Steuereinheit 44 das Stellelement 55 der Verriegelung 34 derart an, dass dieses außer Eingriff mit der Verzahnung 47 der Führung 35 gerät.

Die Verstelleinheit 32 bewegt sich nun mitsamt des Tragelements 30 durch die vorgespannten Federelemente 39, 40 entgegen der y-Richtung y nach unten, wie in den Fig. 7 und 8 mit Hilfe des Pfeils 45 angedeutet ist. Dabei wird der Gurt 64 von dem Gurtwickler 63 abgewickelt und das Dämpfungselement 62 bremst das Tragelement 30 ab. Sobald der Gurt 64 vollständig abgewickelt ist, befindet sich das Tragelement 30 entweder in dem in der Fig. 8 gezeigten eingefahrenen Zustand Z2 oder in einem in der Fig. 7 gezeigten Zwischenzustand Z3.

Der Zwischenzustand Z3 ist nur dann vorgesehen, wenn der Gurt 64 ein Abreißgurt ist. Wird der Zwischenzustand Z3 erreicht, wird der vollständig von dem Gurtwickler 63 abgewickelte Gurt 64 mit einer Zugkraft belastet. Überschreitet diese Zugkraft einen vorher definierten Maximalwert, trennt sich der Gurt 64 in zwei voneinander getrennte Gurtabschnitte 65, 66 auf und das Tragelement 30 bewegt sich aus dem Zwischenzustand Z3 in den eingefahrenen Zustand Z2. Zusätzlich kann jedoch auch noch ein wie mit Bezug auf das Überrollschutzsystem 19A erläutertes Dämpfungselement 56 vorgesehen sein. Für den Fall, dass der Gurt 64 ein Abreißgurt ist, muss dieser vor einem erneuten Einsatz des Überrollschutzsystems 19B ersetzt werden.

Für beide Ausführungsformen des Überrollschutzsystems 19A, 19B gilt, dass eine automatische Absenkung des Tragelements 30 von dem ausgefahrenen Zustand Z1 in den eingefahrenen Zustand Z2 erfolgt, um in einem Gefahrenfall, beispielsweise bei einem Überschlag des Fahrzeugs 1, das Besatzungsmitglied 29 zu schützen. Das Verbringen des Tragelements 30 vom dem ausgefahrenen Zustand Z1 in den eingefahrenen Zustand Z2 kann dabei nicht nur mit Hilfe der zuvor erläuterten Federelemente 39, 40, sondern auch mit Hilfe anderer mechanischer Wirkprinzipien, wie beispielsweise elektrischer, pneumatischer und/oder hydraulischer Wirkprinzipien, erfolgen.

Ferner kann der Aktor 42 zum Verlagern des Tragelements 30 vom dem ausgefahrenen Zustand Z1 in den eingefahrenen Zustand Z2 auch eine Sprengladung aufweisen. Der Aktor 42 kann somit einen, insbesondere pyrotechnischen, Gasgenerator umfassen. Die Auslösung des Überrollschutzsystems 19A, 19B kann automatisiert oder bei Bedarf erfolgen. Der Gefahrenfall kann dabei nicht nur ein Überschlag des Fahrzeugs 1 sein, sondern beispielsweise schwerer Beschuss oder eine drohende Kollision mit einem anderen Fahrzeug oder Objekt.

Das Überrollschutzsystem 19A, 19B dient dem Schutz des Besatzungsmitglieds 29, das ein Fahrer oder auch ein Beifahrer des Fahrzeugs 1 sein kann, im Falle eines Überschlags des Fahrzeugs 1. Somit sind tödliche Kopfverletzungen durch einen Überschlag des Fahrzeugs 1 ausgeschlossen. Der Hauptvorteil des Überrollschutzsystems 19A, 19B besteht darin, dass kein zusätzlicher Schutz über dem Kopf des Besatzungsmitglieds 29 entstehen muss, sondern eine vorhandene Fahrzeugstruktur in Form der Wandung 20 als Schutz für das Besatzungsmitglied 29 dient. Das Besatzungsmitglied 29 wird mit Hilfe des Überrollschutzsystems 19A, 19B in einen sicheren Bereich des Fahrzeugs 1, nämlich in den Innenraum 3, verbracht oder gezogen. In dem Innenraum 3 kann der Kopf des Besatzungsmitglieds 29 den Untergrund 18 oder ein anderes Hindernis in der Umgebung 4 nicht mehr berühren.

Vorzugsweise können für mehrere Besatzungsmitglieder 29, beispielsweise einen Fahrer und einen Beifahrer, mehrere Tragelemente 30 mit einem derartigen Überrollschutzsystem 19A, 19B vorgesehen sein. Diese Tragelemente 30 für Fahrer und Beifahrer sind zum sicheren Führen des Fahrzeugs 1 höhenverstellbar. Fahrer und Beifahrer können diese Höhenverstellung entweder, elektrisch, hydraulisch, pneumatisch oder durch Muskelkraft durchführen.

Die automatische Absenkung des jeweiligen Tragelements 30 im Falle eines Überschlags des Fahrzeugs 1 kann durch ein wie zuvor erläutertes gezieltes Absenken des Tragelements 30 mitsamt der Verstelleinheit 32 erfolgen. Hierzu erkennt die Sensorik 43, die insbesondere einen sogenannten Roll-Over-Protection-Sensor aufweisen kann, dass das Fahrzeug 1 in eine Schieflage gekommen ist, die zwangsläufig zu einem Überschlag des Fahrzeugs 1 führen wird. Es wird unmittelbar eine Absenkung des Tragelements 30 eingeleitet.

Die Bewegung des Tragelements 30 kann beispielsweise durch einen vorgespannten Gasdruckzylinder, einen elektrischen Antrieb, einen hydraulischen Antrieb und/oder eine Sprengladung ausgelöst werden, welche die Verstelleinheit 32 mitsamt dem Tragelement 30 in den Innenraum 3 des Fahrzeugs 1 bewegt.

Sobald sich das Besatzungsmitglied 29 in dem Innenraum 3 befinden, wird das Tragelement 30 mit Hilfe des jeweiligen Dämpfungselements 56, 62 vor Erreichen einer Endlage des Tragelements 30 in Form des eingefahrenen Zustands Z2 sanft abgebremst, damit keine Folgeverletzungen auftreten können. Hierzu kann beispielsweise ein Federwerk, ein Luftkissen oder ein definierter Abreisgurt in Form des Gurts 64 verwendet werden.

Mit Hilfe des Antriebselements 33 wird das Tragelement 30 mitsamt dem Besatzungsmitglied 29 entlang der y-Richtung y nach oben in den ausgefahrenen Zustand Z1 gefahren. Während dieses Vorgangs werden parallel die Federelemente 39, 40 vorgespannt. An einem obersten Punkt eines Verfahrwegs des Tragelements 30 ist das jeweilige Federelement 39, 40 entweder maximal gespannt oder zusammengedrückt. Das Antriebselement 33 wird dann mit Hilfe der Kupplung 52 und des Kupplungsstellelements 53 automatisch ausgeklinkt und das Sperrelement 54 in die Verzahnung 47 der Führung 35 eingeklinkt. Somit ist das Tragelement 30 in dem ausgefahrenen Zustand Z1 fixiert.

Bei dem Eintreten einer potentiellen Gefahr erkennen die Sensorik 43 und die Regel- und Steuereinheit 44 automatisch, dass sich das Fahrzeug 1 in einer kritischen Situation befindet, die zum Umkippen des Fahrzeugs 1 führen wird. Die Regel- und Steuereinheit 44 entriegelt die Verriegelung 34. Da sich das Fahrzeug 1 zu diesem Zeitpunkt schon in einer größeren Schräglage befinden kann, wirkt die Schwerkraftrichtung g nicht mehr vollständig in Richtung der Bodenwandung 36. Um dies zu kompensieren, unterstützen die Federelemente 39, 40 das aktive Hineinziehen oder Hineindrücken der Verstelleinheit 32 mitsamt dem Tragelement 30 in den geschützten Innenraum 3 des Fahrzeugs 1. Dadurch wird das Besatzungsmitglied 29, das auf dem Tragelement 30 angeschnallt sitzt, im Überschlagsfall geschützt und kann keine gravierenden Verletzungen durch einen Überschlag des Fahrzeugs 1 erfahren.

Sobald sich das Tragelement 30 seinem eingefahrenen Zustand Z2 nähert, muss dieses abgebremst werden. Hierzu ist das jeweilige Dämpfungselement 56, 62 vorgesehen. Das Abbremsen kann beispielsweise pneumatisch mit einem entsprechend dimensionierten pneumatischen Zylinder erfolgen. Durch die schnelle Abwärtsbewegung des Tragelements 30 wird in dem Zylinder ein Luftpolster aufgebaut, welches die kinetische und potenzielle Energie der Verstelleinheit 32 mitsamt dem Tragelement 30 und dem Besatzungsmitglied 29 abfängt. Das Überrollschutzsystem 19A kann als reversibel angesehen werden, da bei der Auslösung desselben nicht zwingend Teile beschädigt werden.

Bei dem Überrollschutzsystem 19B wird hingegen zum Abbremsen des Tragelements 30 eine andere Lösung in Form des Gurts 64 genutzt, der bevorzugt ein Abreißgurt ist. Hierbei wird eine definierte Gurtlänge von dem Gurtwickler 63 abgewickelt, die bei dem Erreichen des eingefahrenen Zustands Z2 oder bei dem Erreichen des Zwischenzustands Z3 ihre maximale Länge aufweist. Das Tragelement 30 mit der Verstelleinheit 32 kann zumindest über den Zwischenzustand Z3 hinaus noch ein kurzes Stück entgegen der y-Richtung y nach unten gefahren werden. Dieser Abstand dient dazu, dass der Gurt 64 in Form eines Abreißgurts seine Arbeit übernehmen kann und das Besatzungsmitglied 29 aktiv abbremst, damit dieses nicht zu stark verzögert wird, was zu Verletzungen führen könnte.

Optional kann anstatt des Abwickelns einer definierten Länge des Gurts 64 auch ein Gurtwickler 63 eingesetzt werden, welcher ab einer bestimmten Abwicklungsgeschwindigkeit den Gurt 64 blockiert. Der Gurt 64 kann dabei elastisch verformbar sein, so dass dieser erst ab einer bestimmten Länge reißt. Alternativ kann sich der Gurtwickler 63 ein wenig oberhalb des Zwischenzustands Z3 befinden, so dass ein nicht elastisch verformbarer Gurt 64 eingesetzt werden kann. Eine weitere Alternative ist der Einsatz eines Gurtwicklers 63, der ab einer bestimmten Abwickellänge des Gurts 64 blockiert.

Obwohl die vorliegende Erfindung anhand von Ausführungsbeispielen beschrieben wurde, ist sie vielfältig modifizierbar.

### BEZUGSZEICHENLISTE

- 1: Fahrzeug
- 2: Fahrzeugzelle
- 3: Innenraum
- 4: Umgebung
- 5: Dach
- 6: Vorderwand
- 7: Radachse
- 8: Radachse
- 9: Radachse
- 10: Radachse
- 11: Rad
- 12: Rad
- 13: Rad
- 14: Rad
- 15: Turm
- 16: Bewaffnung
- 17: Drehachse
- 18: Untergrund
- 19A: Überrollschutzsystem
- 19B: Überrollschutzsystem
- 20: Wandung
- 21: Lukenöffnung
- 22: Lukendeckel
- 23: Drehachse
- 24: Scharnier
- 25: Scharnier
- 26: Verriegelungseinheit
- 27: Außenseite
- 28: Innenseite
- 29: Besatzungsmitglied
- 30: Tragelement
- 31: Doppelpfeil
- 32: Verstelleinheit
- 33: Antriebselement
- 34: Verriegelung
- 35: Führung
- 36: Bodenwandung
- 37: Innenseite
- 38: Außenseite
- 39: Federelement
- 40: Federelement
- 41: Zwischenboden
- 42: Aktor
- 43: Sensorik
- 44: Regel- und Steuereinheit
- 45: Pfeil
- 46: Gehäuse
- 47: Verzahnung
- 48: Abtriebswelle
- 49: Drehachse
- 50: Ritzel
- 51: Doppelpfeil
- 52: Kupplung
- 53: Kupplungsstellelement
- 54: Sperrelement
- 55: Stellelement
- 56: Dämpfungselement
- 57: Gehäuse
- 58: Kolben
- 59: Schalter
- 60: Schussdetektionssensorik
- 61: Schalter
- 62: Dämpfungselement
- 63: Gurtwickler
- 64: Gurt
- 65: Gurtabschnitt
- 66: Gurtabschnitt

- F: Fahrtrichtung
- g: Schwerkraftrichtung
- G: Gewichtskraft
- x: x-Richtung
- y: y-Richtung
- z: z-Richtung
- Z1: Zustand
- Z2: Zustand
- Z3: Zwischenzustand

## Patentansprüche

1. Überrollschutzsystem (19A, 19B) für ein geschütztes Fahrzeug (1), mit
einem Tragelement (30) zum Tragen eines Besatzungsmitglieds (29),
einem dem Tragelement (30) zugeordneten Aktor (42),
wobei der Aktor (42) dazu eingerichtet ist, das Tragelement (30) unmittelbar vor oder bei einem Überschlag des geschützten Fahrzeugs (1) von einem ausgefahrenen Zustand (Z1), in dem sich das Besatzungsmitglied (29) teilweise innerhalb und teilweise außerhalb des geschützten Fahrzeugs (1) aufhält, in einen eingefahrenen Zustand (Z2), in dem sich das Besatzungsmitglied (29) vollständig innerhalb des geschützten Fahrzeugs (1) aufhält, zu verbringen, so dass das Besatzungsmitglied (29) während des Überschlags des geschützten Fahrzeugs (1) geschützt ist, und
einem Dämpfungselement (56, 62) zum Verzögern des Tragelements (30) vor einem Erreichen des eingefahrenen Zustands (Z2),
**dadurch gekennzeichnet, dass**
das Dämpfungselement (62) einen Gurtwickler (63) und einen auf den Gurtwickler (63) aufwickelbaren und von diesem abwickelbaren Gurt (64) aufweist.

2. Überrollschutzsystem nach Anspruch 1,
**dadurch gekennzeichnet,**
**dass** der Aktor (42) dazu eingerichtet ist, das Tragelement (30) unmittelbar vor oder bei dem Überschlag des geschützten Fahrzeugs (1) pneumatisch, hydraulisch, elektrisch, mechanisch und/oder explosiv von dem ausgefahrenen Zustand (Z1) in den eingefahrenen Zustand (Z2) zu verbringen.

3. Überrollschutzsystem nach Anspruch 1 oder 2,
**gekennzeichnet durch**
eine Sensorik (43), die dazu eingerichtet ist, eine Verkippung des geschützten Fahrzeugs (1) um zumindest eine Raumrichtung (x, y, z) zu erfassen, und
eine Regel- und Steuereinheit (44), die dazu eingerichtet ist, den Aktor (42) basierend auf Sensorsignalen der Sensorik (43) derart anzusteuern, dass der Aktor (42) das Tragelement (30) unmittelbar vor oder bei dem Überschlag des geschützten Fahrzeugs (1) von dem ausgefahrenen Zustand (Z1) in den eingefahrenen Zustand (Z2) verbringt.

4. Überrollschutzsystem nach Anspruch 3,
**dadurch gekennzeichnet,**
**dass** der Aktor (42) eine Verstelleinheit (32) zum Verstellen einer Höhenposition des Tragelements (30) aufweist, wobei die Regel- und Steuereinheit (44) dazu eingerichtet ist, die Verstelleinheit (32) basierend auf Sensorsignalen der Sensorik (43) derart anzusteuern, dass die Verstelleinheit (32) unmittelbar vor oder bei dem Überschlag des geschützten Fahrzeugs (1) das Tragelement (30) von dem ausgefahrenen Zustand (Z1) in den eingefahrenen Zustand (Z2) verbringt.

5. Überrollschutzsystem nach Anspruch 4,
**dadurch gekennzeichnet,**
**dass** der Aktor (42) eine Führung (35) aufweist, entlang der die Verstelleinheit (32) verlagerbar geführt ist, um das Tragelement (30) unmittelbar vor oder bei dem Überschlag des geschützten Fahrzeugs (1) von dem ausgefahrenen Zustand (Z1) in den eingefahrenen Zustand (Z2) zu verbringen.

6. Überrollschutzsystem nach Anspruch 5,
**dadurch gekennzeichnet,**
**dass** die Verstelleinheit (32) ein Antriebselement (33) aufweist, das dazu eingerichtet ist, die Verstelleinheit (32) entlang der Führung (35) zu verlagern, wobei die Verstelleinheit (32) dazu eingerichtet ist, das Antriebselement (33) vor dem Verbringen des Tragelements (30) von dem ausgefahrenen Zustand (Z1) in den eingefahrenen Zustand (Z2) von der Führung (35) abzukuppeln.

7. Uberrollschutzsystem nach Anspruch 5 oder 6,
**dadurch gekennzeichnet,**
**dass** die Verstelleinheit (32) ein Sperrelement (54) aufweist, das dazu eingerichtet ist, formschlüssig in die Führung (35) einzugreifen, wobei die Verstelleinheit (32) dazu eingerichtet ist, das Sperrelement (54) zum Verbringen des Tragelements (30) von dem ausgefahrenen Zustand (Z1) in den eingefahrenen Zustand (Z2) außer Eingriff mit der Führung (35) zu bringen.

8. Überrollschutzsystem nach einem der Ansprüche 4 - 7,
**dadurch gekennzeichnet,**
**dass** der Aktor (42) zumindest ein Federelement (39, 40) aufweist, wobei die Verstelleinheit (32) dazu eingerichtet ist, das zumindest eine Federelement (39, 40) bei einem Verbringen des Tragelements (30) von dem eingefahrenen Zustand (Z2) in den ausgefahrenen Zustand (Z1) vorzuspannen.

9. Überrollschutzsystem nach Anspruch 8,
**dadurch gekennzeichnet,**
**dass** das zumindest eine vorgespannte Federelement (39, 40) dazu eingerichtet ist, das Tragelement (30) unmittelbar vor oder bei dem Überschlag des geschützten Fahrzeugs (1) von dem ausgefahrenen Zustand (Z1) in den eingefahrenen Zustand (Z2) zu verbringen.

10. Überrollschutzelement nach Anspruch 8 oder 9,
**dadurch gekennzeichnet,**
**dass** der Aktor (42) ein erstes Federelement (39) und ein zweites Federelement (40) aufweist, wobei die Verstelleinheit (32) zwischen dem ersten Federelement (39) und dem zweiten Federelement (40) angeordnet ist.

11. Überrollschutzsystem nach einem der Ansprüche 1 - 10,
**gekennzeichnet durch**
einen Schalter (59) zum Auslösen des Aktors (42), so dass dieser das Tragelement (30) ohne einen Überschlag des geschützten Fahrzeugs (1) von dem ausgefahrenen Zustand (Z1) in den eingefahrenen Zustand (Z2) verbringt.

12. Geschütztes Fahrzeug (1) mit zumindest einem Überrollschutzsystem (19A, 19B) nach einem der Ansprüche 1 - 11.

## Claims

1. Rollover protection system (19A, 19B) for a protected vehicle (1), comprising
a carrier element (30) for carrying a crew member (29),
an actor (42) assigned to the carrier element (30),
wherein the actor (42) is configured to transfer the carrier element (30) immediately before or during a rollover of the protected vehicle (1) from an extended state (Z1), in which the crew member (29) is located partially inside and partially outside the protected vehicle (1), to a retracted state (Z2), in which the crew member (29) is located completely inside the protected vehicle (1), so that the crew member (29) is protected during the rollover of the protected vehicle (1), and
a damping element (56, 62) for decelerating the carrier element (30) before reaching the retracted state (Z2),
**characterized in that**
the damping element (62) comprises a belt coiler (63) and a belt (64) which can be wound onto and unwound from the belt coiler (63).

2. Rollover protection system according to claim 1,
**characterized in that**
the actor (42) is configured to transfer the carrier element (30) pneumatically, hydraulically, electrically, mechanically and/or explosively from the extended state (Z1) to the retracted state (Z2) immediately before or during the rollover of the protected vehicle (1).

3. Rollover protection system according to claim 1 or 2,
**characterized by**
a sensor technology (43) configured to detect a tilting of the protected vehicle (1) about at least one spatial direction (x, y, z), and
a controlling and steering unit (44) configured to control the actor (42) based on sensor signals from the sensor technology (43) in such a way that the actor (42) transfers the carrier element (30) from the extended state (Z1) to the retracted state (Z2) immediately before or during the rollover of the protected vehicle (1).

4. Rollover protection system according to claim 3,
**characterized in that**
the actor (42) comprises an adjustment unit (32) for adjusting a height position of the carrier element (30), wherein the controlling and steering unit (44) is configured to control the adjustment unit (32) based on sensor signals from the sensor technology (43) in such a way that the adjustment unit (32) transfers the carrier element (30) from the extended state (Z1) to the retracted state (Z2) immediately before or during the rollover of the protected vehicle (1).

5. Rollover protection system according to claim 4,
**characterized in that**
the actor (42) comprises a guidance (35) along which the adjustment unit (32) is displaceably guided in order to transfer the carrier element (30) from the extended state (Z1) to the retracted state (Z2) immediately before or during the rollover of the protected vehicle (1).

6. Rollover protection system according to claim 5,
**characterized in that**
the adjustment unit (32) comprises a drive element (33) which is configured to displace the adjustment unit (32) along the guidance (35), wherein the adjustment unit (32) is configured to uncouple the drive element (33) from the guidance (35) before the carrier element (30) is transferred from the extended state (Z1) to the retracted state (Z2).

7. Rollover protection system according to claim 5 or 6,
**characterized in that**
the adjustment unit (32) comprises a locking element (54) which is configured to engage positively in the guidance (35), wherein the adjustment unit (32) is configured to bring the locking element (54) out of engagement with the guidance (35) in order to transfer the carrier element (30) from the extended state (Z1) to the retracted state (Z2).

8. Rollover protection system according to any one of claims 4 - 7,
**characterized in that**
the actor (42) comprises at least one spring element (39, 40), wherein the adjustment unit (32) is configured to pretension the at least one spring element (39, 40) when the carrier element (30) is transferred from the retracted state (Z2) to the extended state (Z1).

9. Rollover protection system according to claim 8,
**characterized in that**
the at least one pretensioned spring element (39, 40) is configured to transfer the carrier element (30) from the extended state (Z1) to the retracted state (Z2) immediately before or during the rollover of the protected vehicle (1).

10. Rollover protection element according to claim 8 or 9,
**characterized in that**
the actor (42) comprises a first spring element (39) and a second spring element (40), wherein the adjustment unit (32) is arranged between the first spring element (39) and the second spring element (40).

11. Rollover protection system according to any one of claims 1 - 10,
**characterized by**
a switch (59) for triggering the actor (42) so that it transfers the carrier element (30) from the extended state (Z1) to the retracted state (Z2) without the protected vehicle (1) rolling over.

12. Protected vehicle (1) comprising at least one rollover protection system (19A, 19B) according to any one of claims 1 - 11.

## Revendications

1. Un système de protection contre le retournement (19A, 19B) pour un véhicule protégé (1), comprenant un élément porteur (30) pour transporter un membre d'équipage (29), un actionneur (42) affecté à l'élément porteur (30), dans lequel l'actionneur (42) est configuré pour transférer l'élément porteur (30) immédiatement avant ou pendant un retournement du véhicule protégé (1) d'un état étendu (Z1), dans lequel le membre d'équipage (29) se trouve en partie à l'intérieur et en partie à l'extérieur du véhicule protégé (1), à un état rétracté (Z2), dans lequel le membre d'équipage (29) se trouve entièrement à l'intérieur du véhicule protégé (1), de sorte qu'il soit protégé pendant le retournement du véhicule protégé (1), et un élément amortisseur (56, 62) pour décélérer l'élément porteur (30) avant d'atteindre l'état rétracté (Z2), **caractérisé en ce que** l'élément amortisseur (62) comprend un enrouleur de courroie (63) et une courroie (64) qui peut être enroulée sur l'enrouleur de courroie (63) et y être déroulée.

2. Le système de protection contre le retournement selon la revendication 1, **caractérisé en ce que** l'actionneur (42) est configuré pour transférer l'élément porteur (30) pneumatiquement, hydrauliquement, électriquement, mécaniquement et/ou explosivement de l'état étendu (Z1) à l'état rétracté (Z2) immédiatement avant ou pendant le retournement du véhicule protégé (1).

3. Le système de protection contre le retournement selon l'une quelconque des revendications 1 à 2, **caractérisé en ce qu'**un capteur (43) configuré pour détecter une inclinaison du véhicule protégé (1) autour d'au moins une direction spatiale (x, y, z), et une unité de commande et de direction (44) configurée pour commander l'actionneur (42) sur la base des signaux de capteur provenant de la technologie de capteur (43) de manière à ce que l'actionneur (42) transfère l'élément porteur (30) de l'état étendu (Z1) à l'état rétracté (Z2) immédiatement avant ou pendant le retournement du véhicule protégé (1).

4. Le système de protection contre le retournement selon la revendication 3, **caractérisé en ce que** l'actionneur (42) comprend une unité de réglage (32) pour ajuster une position en hauteur de l'élément porteur (30), dans laquelle l'unité de contrôle et de direction (44) est configurée pour commander l'unité de réglage (32) sur la base de signaux de capteurs provenant de la technologie de capteurs (43) de manière à ce que l'unité de réglage (32) fasse passer l'élément porteur (30) de l'état étendu (Z1) à l'état rétracté (Z2) immédiatement avant ou pendant le retournement du véhicule protégé (1).

5. Le système de protection contre le retournement selon la revendication 4,
**caractérisé en ce que** l'actionneur (42) comprend un guidage (35) le long duquel l'unité de réglage (32) est guidée de manière déplaçable afin de faire passer l'élément porteur (30) de l'état étendu (Z1) à l'état rétracté (Z2) immédiatement avant ou pendant le retournement du véhicule protégé (1).

6. Le système de protection contre le retournement selon la revendication 5, **caractérisé en ce que** l'unité de réglage (32) comprend un élément d'entraînement (33) configuré pour déplacer l'unité de réglage (32) le long du guidage (35), l'unité de réglage (32) étant configurée pour désaccoupler l'élément d'entraînement (33) du guidage (35) avant que l'élément porteur (30) ne passe de l'état étendu (Z1) à l'état rétracté (Z2).

7. Le système de protection contre le retournement selon les revendications 5 ou 6, **caractérisé en ce que** l'unité de réglage (32) comprend un élément de verrouillage (54) qui est configuré pour s'engager positivement dans le guidage (35), l'unité de réglage (32) étant configurée pour faire sortir l'élément de verrouillage (54) de l'engagement avec le guidage (35) afin de faire passer l'élément porteur (30) de l'état étendu (Z1) à l'état rétracté (Z2).

8. Le système de protection contre le retournement selon les revendications 4 ou 7, **caractérisé en ce que** l'actionneur (42) comprend au moins un élément de ressort (39, 40), dans lequel l'unité de réglage (32) est configurée pour précontraindre ledit au moins un élément de ressort (39, 40) lorsque l'élément porteur (30) est transféré de l'état rétracté (Z2) à l'état étendu (Z1).

9. Le système de protection contre le retournement selon la revendication 8, **caractérisé en ce que** ledit au moins un élément de ressort précontraint (39, 40) est configuré pour faire passer l'élément porteur (30) de l'état étendu (Z1) à l'état rétracté (Z2) immédiatement avant ou pendant le retournement du véhicule protégé (1).

10. Le système de protection contre le retournement selon les revendications 8 ou 9, **caractérisé en ce que** l'actionneur (42) comprend un premier élément de ressort (39) et un deuxième élément de ressort (40), dans lequel l'unité de réglage (32) est disposée entre le premier élément de ressort (39) et le deuxième élément de ressort (40).

11. Le système de protection contre le retournement selon l'une quelconque des revendications 1 à 10, **caractérisé par** un interrupteur (59) pour déclencher l'actionneur (42) afin qu'il fasse passer l'élément porteur (30) de l'état étendu (Z1) à l'état rétracté (Z2) sans que le véhicule protégé (1) ne se retourne.

12. Véhicule protégé (1) comprenant au moins un système de protection contre le retournement (19A, 19B) selon l'une quelconque des revendications 1 à 11.
